(19) Europäisches Patentamt
European Patent Office
Office européen des brevets

(11) **EP 2 136 554 A2**

(12) **EUROPEAN PATENT APPLICATION**

(43) Date of publication:
**23.12.2009  Bulletin 2009/52**

(51) Int Cl.:
***H04N 5/44*** *(2006.01)*

(21) Application number: **09251344.9**

(22) Date of filing: **19.05.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK TR**<br><br>(30) Priority: **20.06.2008  JP 2008161581**<br><br>(71) Applicant: **Sony Corporation**<br>**Tokyo (JP)** | (72) Inventors:<br>• **Ito, Atsushi**<br>  **Tokyo (JP)**<br>• **Kobayashi, Seiji**<br>  **Tokyo (JP)**<br><br>(74) Representative: **Merryweather, Colin Henry**<br>**J.A. Kemp & Co.**<br>**14 South Square**<br>**Gray's Inn**<br>**London WC1R 5JJ (GB)** |

(54) **Apparatus, method, and program for processing image**

(57)  An image processing apparatus includes a correction parameter calculation unit for calculating a motion blur correction parameter for motion blur correction on the basis of motion information indicating a motion of an image between unit images, the unit images forming image data, and shutter speed information obtained at the image capturing of the image data, and a motion blur correction processing unit for correcting a motion blur quantity contained in the image data by performing at least a process of reducing a motion blur in accordance with the motion blur correction parameter.

## FIG. 1

EP 2 136 554 A2

**Description**

BACKGROUND OF THE INVENTION

1. Field of the Invention

The present invention relates to an apparatus, method and program for processing an image and, in particular, to an image processing technique for obtaining a high-quality image taking into consideration a motion image blur on the image.

2. Description of the Related Art

When a moving image taken at a high-speed shutter or an animation is displayed on a display device such as a projector or a display, the motion of a moving object contained in an image can be displayed in a discontinued fashion. This leads to frequent image degradation in which a user sees multiple images of the moving object. The degradation of the moving image due to motion unnaturalness is generally referred to as motion jerkiness. On the other hand, when a moving image taken at a low-speed shutter such as with an open shutter is displayed, the image of an object may lack detail or an edge of the image becomes blurred because of the effect of motion blur. This phenomenon is referred to as motion blur, which is also one of the image degradations.

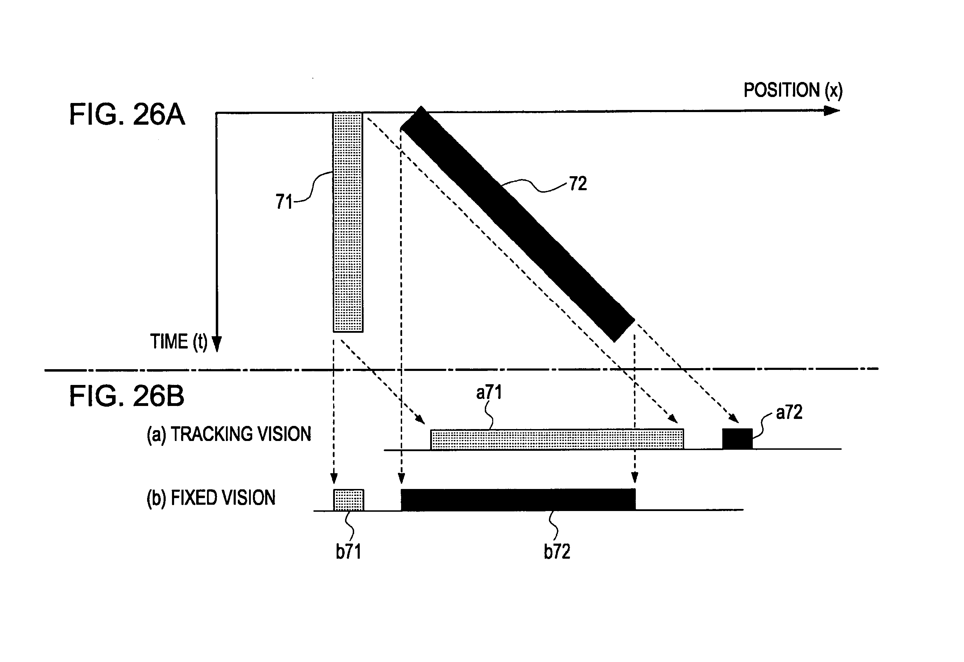

The principle of the generation of jerkiness and blur is described with reference to Figs. 26-28. In accordance with vision characteristics, humans are known to visually recognize a light ray incident on the eyes as a value that results from integrating the light ray for a predetermined period of time. Figs. 26-28 diagrammatically illustrate the way an object is viewed by a viewer in accordance with the vision characteristics.

Fig. 26A and 26B illustrate how a still object and a moving object look in the real world.

Fig. 26A illustrate chronological movement of a still object 71 and a moving object 72 with the abscissa representing position (x) and the ordinate representing time (t). Fig. 26B diagrammatically illustrates the vision of a viewer who views the still object 71 and the moving object 72. The viewers views the objects in two vision conditions, i.e., a tracking vision tracking the moving object 72 and a fixed vision not tracking the moving object 72, respectively illustrated as (a) tracking vision and (b) fixed vision.

If the moving object 72 is tracked by the viewer in (a) tracking vision as illustrated in Fig. 26B, the moving object 72 looks like moving object vision information a72. This is identical to fixed object vision information b71 in which the still object 71 looks in (b) fixed vision in Fig. 26B. If the viewer views the moving object 72 in the tracking vision in this way, the moving object 72 looks in the same way as the still object 71 looks in the fixed vision. If the viewer views the moving object 72 in the fixed vision as in (b) fixed vision illustrated in Fig. 26B, the moving object 72 looks like moving object vision information b72 in Fig. 26B. The viewer visually recognizes the moving object as a continuously moving object, and is free from any discomfort viewing.

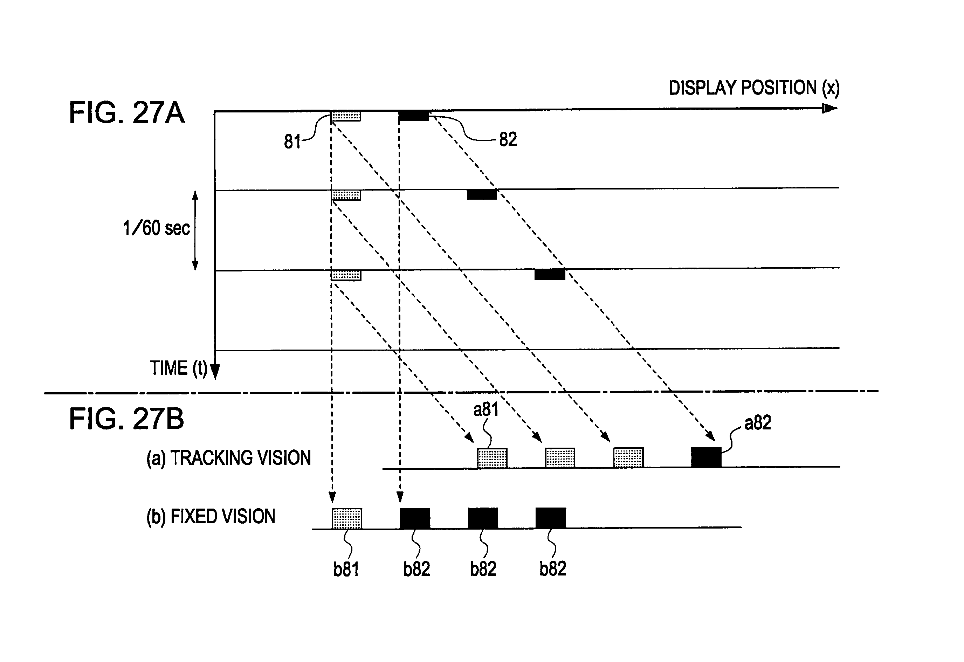

Figs. 27A and 27B illustrate the principle of the generation of jerkiness viewed by the viewer when a moving image taken at a high-speed shutter or an animation is displayed on a display device such as a projector or a display device. Jerkiness is a phenomenon in which the motion of a moving object contained in an image is displayed in a discontinuous manner, causing the viewer to visually recognize multiple images of the moving object.

A moving object in the real world in Figs. 26A and 26B is imaged at a high-speed shutter, and then displayed on a display device at a refresh rate of 60 Hz. Fig. 27A and 27B illustrate the way the viewer visually recognizes the moving object. Fig. 27A illustrates a change in the display positions of a display still object 81 and a display moving object 82 on a display device. In Fig. 27A, the ordinate represents time (t) and is graduated in refresh periods of the display device (each period being 1/60 second), and the abscissa represents display position (x). Fig. 27B diagrammatically illustrates the vision status of the viewer who views the display still object 81 and the display moving object 82 displayed on the display device. The vision status of the viewer includes (a) tracking vision in which the viewer views the image with the display moving object 82 being tracked, and (b) fixed vision in which the viewer views the image with the display moving object 82 not tracked but with the vision of the viewer fixed.

When the display moving object 82 displayed on the display device is viewed by the viewer in (a) tracking vision as illustrated in Fig. 27B, an image a82 looks in the same way as the image a72 looks in (a) tracking vision in Fig. 26B. The viewer visually recognizes the image in the same way as the viewer views a still object in the fixed vision.

When the display moving object 82 displayed on the display device is viewed by the viewer in (b) fixed vision as illustrated in Fig. 27B, the display moving object 82 looks like images b82 not continuously moving but discontinuously moving in a manner different from the real world in the viewer's vision. As a result, the viewer visually recognizes as multiple images the moving object displayed on the display device based on the human vision characteristics. In human vision characteristics, humans visually recognize a light ray incident on the eyes as a value that results from integrating the light ray for a predetermined period of time.

The viewer thus views a single object as multiple objects. This phenomenon is called jerkiness. In principle, an object moving at a high speed suffers more from jerkiness. The lower the frame rate of the display device, the more jerkiness takes place, and the higher the frame rate, the less jerkiness takes place. Furthermore, jerkiness takes place more in a portion of an image where a change in spatial luminance is large, i.e., where a spatial contrast is high.

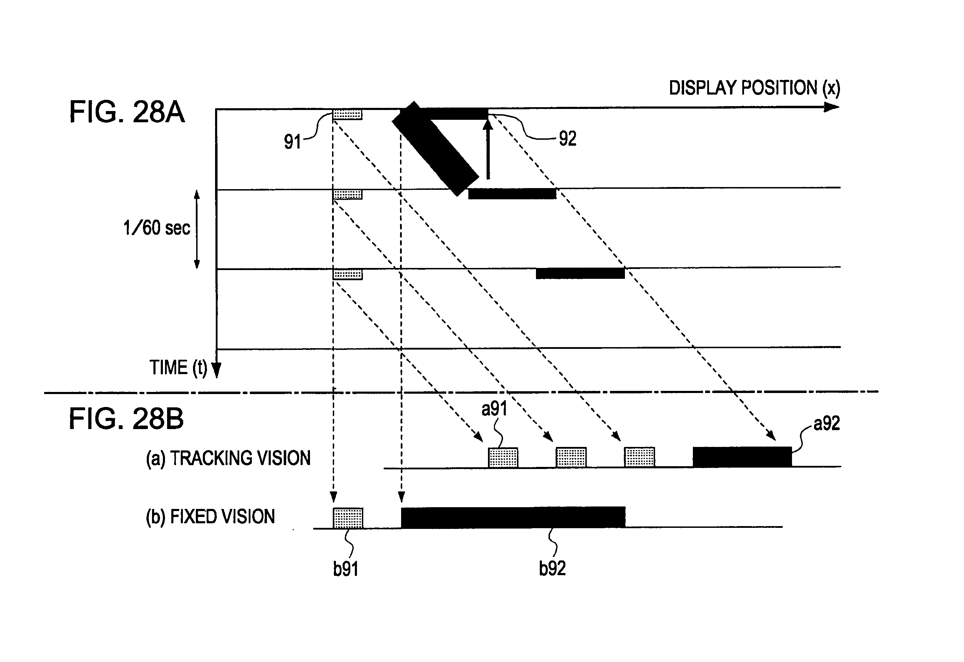

Figs. 28A and 28B illustrate how a blur viewed by the viewer is generated when a moving image taken at a low-speed shutter such as with an open shutter or an animation is displayed on a display device such as a projector or a display. The blur is a phenomenon in which the image of an object may lack detail or an edge of the image becomes blurred because of the effect of motion blur.

Figs. 28A and 28B diagrammatically illustrate how the moving object in the real world illustrated in Figs. 26A and 26B looks to the viewer when the moving object is imaged at a low-speed shutter and then displayed on the display device at a refresh rate of 60 Hz. Fig. 28A illustrates a change in the display positions of a display still object 91 and a display moving object 92 on the display device. In Fig. 28A, the ordinate represents time (t) and is graduated in refresh periods of the display device (each period being 1/60 second), and the abscissa represents display position (x). Fig. 28B diagrammatically illustrates the vision status of the viewer who views the display still object 91 and the display moving object 92 displayed on the display device. The vision status of the viewer includes (a) tracking vision in which the viewer views the image with the display moving object 92 being tracked, and (b) fixed vision in which the viewer views the image with the display moving object 92 not tracked but with the vision of the viewer fixed.

When the display moving object 92 displayed on the display device is viewed by the viewer in (b) fixed vision as illustrated in Fig. 28B, an image b92 looks in the same way as the image b72 looks in (b) fixed vision in Fig. 26B. The viewer visually recognizes the moving object as a continuously moving object, and is free from any discomfort viewing.

When the display moving object 92 displayed on the display device is viewed by the viewer in tracking vision, an image a92 looks to the viewer as a blurred image as illustrated in Fig. 28B in a manner different from the case in which the still object is viewed in fixed vision. When the display moving object 92 in Fig. 28A is imaged, the motion of the moving object during a long exposure of a low-speed shutter is recorded within one frame, and the moving object is thus displayed as a band in one frame. Such a phenomenon is referred to as blur.

In principle, there is a trade-off between jerkiness and blur with respect to the imaging shutter speed. Mere shutter control causes either the degradation of jerkiness or the degradation of blur to be pronounced. More specifically, if an image taken at a relatively high shutter speed with respect to the frame rate of the moving image is displayed as a still image, high sharpness is provided. If the image is displayed as a moving image, the motion of a moving area within the image, in particular, a moving area at a high speed is not smooth. Such an image looks unnatural to the vision of humans. If an image taken at a relatively low shutter speed with respect to the frame rate of the moving image is displayed as a moving image, high sharpness is provided. If the image is displayed as a moving image, the motion of a high-speed moving area within the image is smooth, but the entire image lacks sharpness.

Japanese Unexamined Patent Application Publication No. 2007-274299 (WO07/114220), assigned to the same assignee of the present invention, discloses a jerkiness reducing technique intended to be used on an image taken at a high shutter speed. In accordance with the disclosed technique, a motion blur is added through image processing. An added amount of motion blur is controlled through analysis of image processing so that the excessive addition of the motion blur does not cause blur degradation. A technical approach of reducing the motion blur through image processing performed mainly on an input image taken at a low shutter speed is widely studied. For example, image processing techniques for correcting blur of an image include mainly an inverse convolution technique based on a blur model, and a technique not using no blur model, such as a peaking technique or a shock filter technique. For example, the technique disclosed in the paper entitled "Extension of Coupled Nonlinear Diffusion to Motion De-blurring - Introduction of Anisotropic Peaking," Takahiro SAITO, Hiroyuki HARADA, and Takashi KOMATSU, The Institute of Image Information and Television Engineers Vol. 58, No. 12 pp. 1839-1844 (2004) is related to the blur-model-based inverse convolution technique as motion blur reduction means. The technique disclosed in the paper entitled "Motion De-blurring Using a Blur Model," Takahiro SAITO, Hiroyuki HARADA, Taishi SANO, and Takashi KOMATSU, The Institute of Image Information and Television Engineers Vol. 59, No. 11, pp. 1714-1721 (2005) is related to the technique not using no blur model as motion blur reduction means.

SUMMARY OF THE INVENTION

As described above, there is a trade-off between jerkiness and blur with respect to the imaging shutter speed. Mere shutter control causes either jerkiness or blur to be pronounced.

It is thus desirable to provide an image processing technique appropriately responding to the causes of the above-described image degradations and adaptively applied to jerkiness and blur to control jerkiness and blur degradations.

In accordance with one embodiment of the present invention, an image processing apparatus includes correction parameter calculation means for calculating a motion blur correction parameter for motion blur correction on the basis of motion information indicating a motion of an image between unit images, the unit images forming image data, and shutter speed information obtained at the image capturing of the image data, and motion blur correction processing means for correcting a motion blur quantity contained in the image data by performing at least a process of reducing a motion blur in accordance with the motion blur correction parameter.

The motion blur correction processing means may perform a process of adding a motion blur on the image data and the process of reducing a motion blur in accordance with the motion blur correction parameter.

The image processing apparatus may further include shutter speed estimation processing means for estimating shutter speed information by analyzing the image data, wherein the correction parameter calculation means uses the shutter speed information estimated by the shutter speed estimation processing means in order to calculate the motion blur correction parameter.

The motion blur correction processing means may adaptively select in response to each partition area of the image data one of the process of adding the motion blur and the process of reducing the motion blur on the image data, in accordance with the motion blur correction parameter.

The motion blur correction processing means may perform on the image separately the process of adding the motion blur and the process of reducing the motion blur, and select between data resulting from the process of adding the motion blur and data resulting from the process of reducing the motion blur in accordance with the motion blur correction parameter as data to be adaptively output for each partition area of the image data.

The image processing apparatus may further include motion vector generating means for generating from the image data a motion vector as the motion information.

The shutter speed estimation processing means may include a motion blur characteristic analyzer for extracting a shutter speed calculation parameter by analyzing motion blur characteristics contained in a target area of the image data, and an imaging shutter speed calculator for calculating the shutter speed at the image capturing of the image data.

The shutter speed estimation processing means may further include a process target area selector for extracting and identifying from the unit image forming the image data the target area of the analysis process of the motion blur characteristic analyzer.

The image processing apparatus may further include motion vector generating means for generating from the image data a motion vector as the motion information. The process target area selector in the shutter speed estimation processing means identifies the target area using edge information of the image data, and the motion vector generated by the motion vector generating means.

The shutter speed estimation processing means may further include an imaging shutter speed accuracy enhancement processor. The motion blur characteristic analyzer extracts the shutter speed calculation parameters of a plurality of target areas. The imaging shutter speed calculator calculates a plurality of shutter speeds using the shutter speed calculation parameters of the plurality of target areas and the motion information of the respective target areas. The imaging shutter speed accuracy enhancement processor estimates an imaging shutter speed using calculation results of the plurality of shutter speeds.

The shutter speed estimation processing means may estimate the shutter speed once within a period from the detection of a scene change to the detection of a next scene change in the input image data, and hold the estimated shutter speed within the period.

The shutter speed estimation processing means may include an imaging shutter speed accuracy enhancement processor. The imaging shutter speed accuracy enhancement processor estimates the shutter speed by a plurality of times within a period from the detection of a scene change to the detection of a next scene change in the input image data, and estimates an imaging shutter speed on the basis of the calculation results of the plurality shutter speeds estimated.

The correction parameter calculation means may acquire an optimum shutter speed corresponding to a speed of an object from each partition area of the image data by referencing mapping information mapping the object speed to an imaging shutter speed at which image quality degradation of an output image is reduced, and calculate the motion blur correction parameter as selection control information for selecting between a process of adding a motion blur and a process of reducing a motion blur on the image data by comparing information regarding an input imaging shutter speed with the optimum shutter speed. The motion blur correction processing means may selectively perform on the image data the process of adding the motion blur and the process of reducing the motion blur in accordance with the motion blur correction parameter.

The correction parameter calculation means may acquire an optimum shutter speed corresponding to a speed of an object from each partition area of the image data by referencing mapping information mapping the object speed to an imaging shutter speed at which image quality degradation of an output image is reduced, and calculate the motion blur correction parameter as selection control information for selecting between a process of adding a motion blur and a process of reducing a motion blur on the image data by comparing information regarding an input imaging shutter speed with the optimum shutter speed. The motion blur correction processing means may perform on the image separately the process of adding the motion blur and the process of reducing the motion blur, and select between data resulting from the process of adding the motion blur and data resulting from the process of reducing the motion blur in accordance with the motion blur correction parameter as data to be adaptively output for each partition area of the image data.

The correction parameter calculation means may calculate the motion blur correction parameter indicating one of the degree of addition of the motion blur and the degree of reduction of the motion blur, respectively used by the motion blur correction processing means in the process of adding the motion blur and the process of reducing the motion blur on the image data.

The motion blur correction parameter indicating one of the degree of addition of the motion blur and the degree of reduction of the motion blur may include one of an imaging shutter speed and a difference between the imaging shutter speed and an optimum shutter speed.

The motion blur correction parameter indicating one of the degree of addition of the motion blur and the degree of reduction of the motion blur may include movement speed information of a partition area.

In accordance with another embodiment of the present invention, an image processing method includes the steps of calculating a motion blur correction parameter for motion blur correction on the basis of motion information indicating a motion of an image between unit images, the unit images forming image data, and shutter speed information obtained at the image capturing of the image data, and correcting a motion blur quantity contained in the image data by performing at least a process of reducing a motion blur in accordance with the motion blur correction parameter.

In accordance with yet another embodiment of the present invention, a program causes a computer to perform an image processing method. The image processing method includes the steps of calculating a motion blur correction parameter for motion blur correction on the basis of motion information indicating a motion of an image between unit images, the unit images forming image data, and shutter speed information obtained at the image capturing of the image data, and correcting a motion blur quantity contained in the image data by performing at least a process of reducing a motion blur in accordance with the motion blur correction parameter.

BRIEF DESCRIPTION OF THE DRAWINGS

Fig. 1 is a block diagram of a first basic structure of an image processing apparatus in accordance with one embodiment of the present invention;
Fig. 2 illustrates a partition area in accordance with one embodiment of the present invention;
Fig. 3 is a block diagram of a second basic structure of the image processing apparatus in accordance with one embodiment of the present invention;
Fig. 4 is a block diagram of a third basic structure of the image processing apparatus in accordance with one embodiment of the present invention;
Fig. 5 is a block diagram of an image reproducing apparatus in accordance with one embodiment of the present invention;
Fig. 6 is a block diagram of a motion vector generation processor in accordance with one embodiment of the present invention;
Fig. 7 is a flowchart illustrating operation of the motion vector generation processor of one embodiment of the present invention;
Fig. 8 is a block diagram illustrating a shutter speed estimation processor in accordance with one embodiment of the present invention;
Fig. 9 illustrates a motion blur length in accordance with one embodiment of the present invention;
Figs. 10A1 through 10C2 illustrate the motion blur length in accordance with one embodiment of the present invention;
Figs. 11A-11C illustrate a calculation process of the motion blur length in accordance with one embodiment of the present invention;
Fig. 12 is a detailed block diagram illustrating a shutter speed estimation processor in accordance with one embodiment of the present invention;
Fig. 13 illustrates a process of a motion blur characteristic analyzer in accordance with one embodiment of the present invention;
Fig. 14 is a motion blur sample frequency table in accordance with one embodiment of the present invention;
Fig. 15 is a block diagram of a motion blur correction parameter calculator and a motion blur correction processor in accordance with one embodiment of the present invention;
Fig. 16 illustrates an optimum shutter speed in accordance with one embodiment of the present invention;
Fig. 17 is a flowchart of a process of a process selection controller in accordance with one embodiment of the present invention;
Fig. 18 illustrates a process performed in response to a speed of an object and an imaging shutter speed in accordance with one embodiment of the present invention;

Fig. 19 is a block diagram of a motion blur reduction processor in accordance with one embodiment of the present invention;

Figs. 20A and 20B illustrate a smoothing filter in accordance with one embodiment of the present invention;

Fig. 21 is a block diagram of a motion blur addition processor in accordance with one embodiment of the present invention;

Fig. 22 is a flowchart illustrating of a motion vector masking process in accordance with one embodiment of the present invention;

Fig. 23 illustrates a filter parameter calculation process in accordance with one embodiment of the present invention;

Fig. 24 is a block diagram of another motion blur addition processor in accordance with one embodiment of the present invention;

Fig. 25 is a block diagram illustrating another motion blur correction processor in accordance with one embodiment of the present invention;

Figs. 26A and 26B illustrate the generation principle of jerkiness and blur relating to how a still object and a moving object look;

Figs. 27A and 27B illustrate the generation principle of jerkiness; and

Figs. 28A and 28B illustrate the generation principle of blur.

DESCRIPTION OF THE PREFERRED EMBODIMENTS

The embodiments of the present invention are described below with reference to the drawings.

First through third basic structures of image processing apparatuses of embodiments of the present invention are described below. The present invention is not limited to the three basic structures described below.

An image processing apparatus of one embodiment of the present invention is intended to generate an image with jerkiness and blur thereof reduced through image processing. If a moving image taken at simple shutter control is displayed on a display device, that moving image may look unnatural due to human vision characteristics with either jerkiness or blur pronounced. In accordance with one embodiment of the present invention, the generation of jerkiness is reduced by adding a motion blur to a high-speed shutter captured image in accordance with information regarding a shutter speed used at the capturing of an input image. If a low-speed shutter captured image is input, a process of reducing a motion blur is performed in order to reduce a blur degradation. More specifically, two processes (of adding and reducing a motion blur) are adaptively performed in response to conditions of an input image signal, and the relationship between a shutter speed used at the image capturing and a movement speed of an object. Both the jerkiness degradation and blur degradation are thus controlled. A high-quality image process is performed by generating an image signal with less image degradation and outputting the high-quality image.

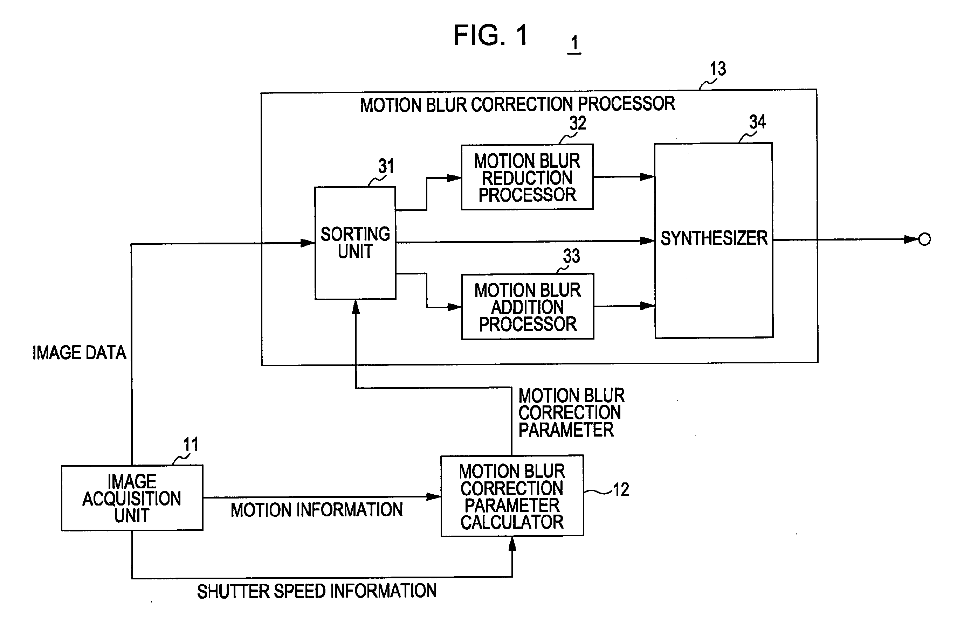

Fig. 1 illustrates an image processing apparatus 1 having the first basic structure.

The image processing apparatus 1 includes an image acquisition unit 11, a motion blur correction parameter calculator 12, and a motion blur correction processor 13. The image acquisition unit 11 acquires image data into the image processing apparatus 1. The motion blur correction parameter calculator 12 sets a parameter for correcting a motion blur on the image acquired by the image acquisition unit 11. The motion blur correction processor 13 performs a motion blur correction process on the image data acquired by the image acquisition unit 11.

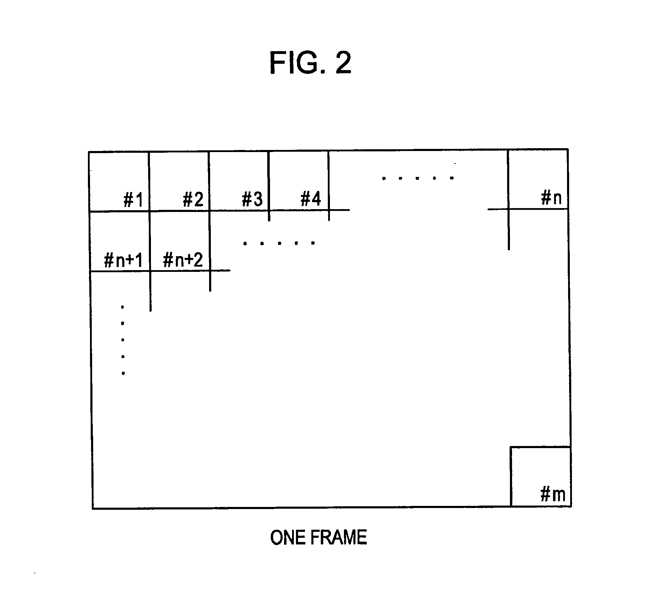

The motion blur correction parameter calculator 12 receives motion information of the image data acquired by the image acquisition unit 11, and shutter speed information indicating an exposure time of each frame when the image data is captured. The motion blur correction parameter calculator 12 calculates from these pieces of input information an optimum parameter for correcting the motion blur of the acquired image data on a per partition area basis in each frame of the image data, and then supplies the calculated optimum parameter to the motion blur correction processor 13. As illustrated in Fig. 2, for example, the motion blur correction parameter calculator 12 sets a plurality of partition areas (pixel blocks) #1-#m within one frame, calculates a motion blur correction parameter for each of the partition areas #1-#m, and then supplies the motion blur correction parameter to the motion blur correction processor 13. The motion information is not limited to information indicating a motion of an image between frames. The motion information may be information representing a motion of an image between unit images forming a moving image, such as information representing a motion of an image between fields.

The motion blur correction processor 13 corrects a quantity of motion blur of the image data, using the motion blur correction parameter calculated by the motion blur correction parameter calculator 12 and then externally outputs the motion blur corrected image data from within the image processing apparatus 1. The motion blur correction processor 13 includes a sorting unit 31, a motion blur reduction processor 32, a motion blur addition processor 33, and a synthesizer 34.

The sorting unit 31 outputs the image data of each of the partition areas #1-#m of the input image data to one of the motion blur reduction processor 32 and the motion blur addition processor 33, depending on whether the motion blur quantity of the partition area is to be reduced or increased. The motion blur reduction processor 32 performs a process of reducing the motion blur quantity of the corresponding area of the input image data. The motion blur addition processor 33 performs a process of increasing the motion blur quantity of the corresponding area of the input image data. If motion blur correction is not using in a given partition area, the sorting unit 31 outputs the image data of that partition area to the synthesizer 34. Optionally, if motion blur correction is not using, the motion blur reduction processor 32 and the motion blur addition processor 33 may perform the processes thereof in a setting with a correction motion blur quantity set to zero.

The synthesizer 34 performs a synthesis process, synthesizing, as a frame image, the image data of each partition area, corrected by one of the motion blur reduction processor 32 and the motion blur addition processor 33, and the image data of a partition area having undergone no correction.

The sorting unit 31 in the motion blur correction processor 13 receives the motion blur correction parameter calculated by the motion blur correction parameter calculator 12. The motion blur correction parameter is calculated for each of the partition areas in each frame of the image data, and contains information regarding the motion blur correction process to be performed on a partition area being currently set as a process target of the image data. The motion blur correction process of the motion blur correction processor 13 includes performing one of a process of reducing the motion blur (de-blur process) in the area where the blur degradation is likely, and a process of adding the motion blur (ad-blur process) in the area where an insufficient motion blur, i.e., a jerkiness degradation is likely. The sorting unit 31 sorts the image data of each partition area in response to the motion blur correction parameter. More specifically, the sorting unit 31 outputs the image data of the partition area that is to be de-blurred to the motion blur reduction processor 32 and the image data of the partition area that is to be ad-blurred to the motion blur addition processor 33.

The image data output to one of the motion blur reduction processor 32 and the motion blur addition processor 33 thus undergoes the optimum motion blur correction process in order to reduce both the jerkiness degradation and the blur degradation. The image data having undergone the optimum motion blur correction process is supplied to the synthesizer 34. The areas of the image data having undergone the motion blur correction process are synthesized by the synthesizer 34 and the resulting image data is thus output. The motion blur correction processor 13 outputs a moving image signal with the jerkiness degradation and blur degradation thereof reduced.

In one embodiment of the present invention, the image processing apparatus may perform only the correction process of the motion blur reduction processor 32 with the motion blur addition processor 33 eliminated from the motion blur correction processor 13. Alternatively, only the motion blur addition processor 33 performs the correction process with the motion blur reduction processor 32 eliminated from the motion blur correction processor 13. In such a case, however, one of the jerkiness degradation and the blur degradation might persist. For example, if only the de-blur process is performed, the jerkiness degradation may not be reduced in response to the image data that has been captured at a high shutter speed. Conversely, if only the ad-blur process is performed, the blur degradation occurring in the area where an object is moving may not be reduced in response to the image data that has been captured at a low shutter speed.

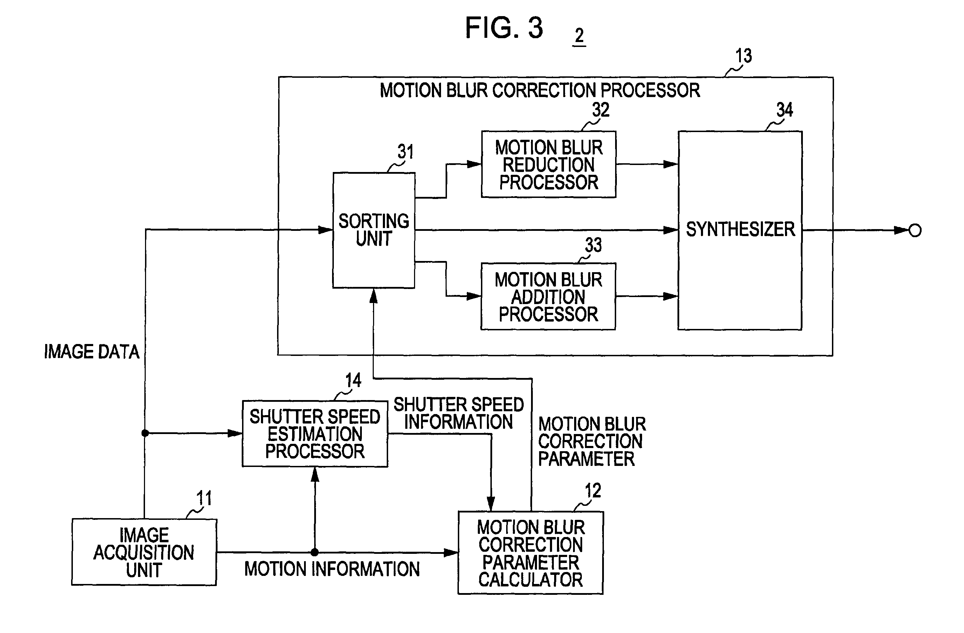

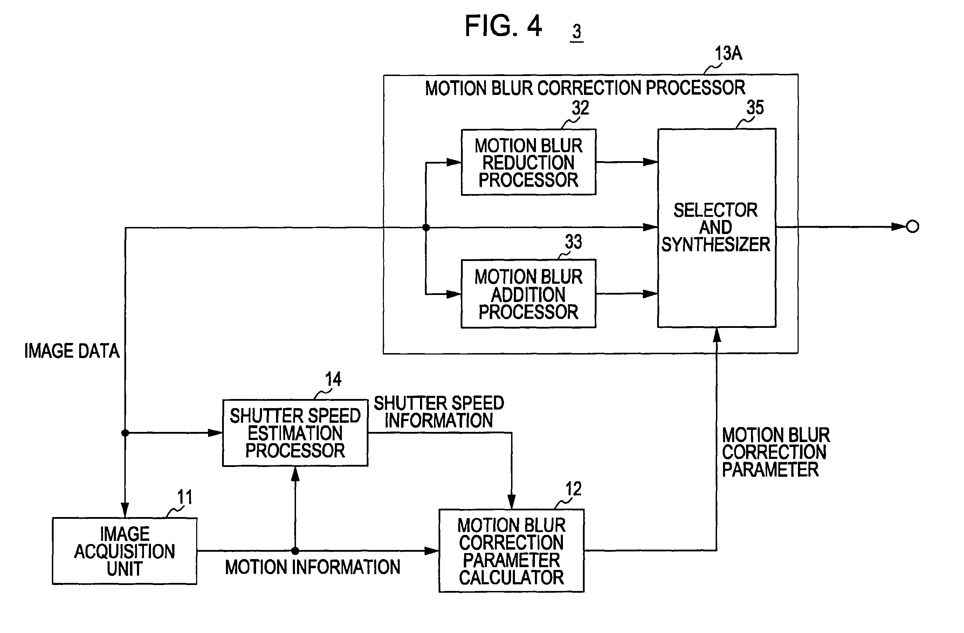

A combination of the de-blur process and the ad-blur process in the structure of Fig. 1 reduces both the jerkiness degradation and the blur degradation regardless of conditions such as an imaging shutter speed of the image data. The same is true of the structures illustrated in Figs. 3 and 4. When the image data is displayed, the jerkiness degradation and the blur degradation take place, causing the image of the image data to look unnatural to the eyes of humans. The image processing apparatus 1 thus constructed reduces the jerkiness degradation and the blur degradation by correcting adaptively the motion blur of the image data in response to the motion information of the image data and the information of the shutter speed at the image capturing.

Fig. 3 illustrates as the second structure an image processing apparatus 2 in accordance with one embodiment of the present invention. The image processing apparatus 1 having the first structure is based on the premise that the image acquisition unit 11 obtains the shutter speed information of the image data. The shutter speed information at the image capturing is referred to in the selection of the motion blur correction processes (ad-blur process and de-blur process). For example, the image processing apparatus 1 including the image acquisition unit 11 having an image capturing function executes an image capturing operation, thereby obtaining the image data. With the image capturing function, the image processing apparatus 1 can easily extract a shutter speed value used in the actual image capturing operation. If the shutter speed information is contained as metadata or the like of the image data, the value of the shutter speed is acquired from the metadata. If the image processing apparatus is part of an apparatus that displays an image signal by receiving the image signal or by reproducing the image signal from a recording medium, the shutter speed at the image capturing of the image data typically remains unknown.

The image processing apparatus 2 having the second structure analyzes an input image signal through image processing, thereby estimating a shutter speed at the image capturing of the image signal. Fig. 3 illustrates the image processing apparatus 2 having the second structure, in which the image acquisition unit 11 does not acquire the shutter speed information indicating an exposure time of each frame of the image data. The image processing apparatus 2 is different from the image processing apparatus 1 of Fig. 1 in that a shutter speed estimation processor 14 is included.

The shutter speed estimation processor 14 receives the image data, which is also acquired by the image acquisition unit 11, and the motion information of the image data. The shutter speed estimation processor 14 performs image processing in order to analyze the input image data, and thus estimates the shutter speed information indicating the exposure time of each frame at the image capturing of the image data. The estimated shutter speed information is output to the motion blur correction parameter calculator 12. The process performed by the motion blur correction parameter calculator 12 and the motion blur correction processor 13 is identical to the process of the counterparts in the image processing apparatus 1 illustrated in Fig. 1.

The jerkiness degradation and the blur degradation typically take place in the displayed image, causing the image of the image data to look unnatural to the eyes of humans. The image processing apparatus 2 thus constructed analyzes the image data using the motion information of the image data affecting the jerkiness degradation and the blur degradation. The image processing apparatus 2 estimates the information of the shutter speed at the image capturing of the image data, and corrects the motion blur of the image data adaptively in response to the estimated shutter speed information. The image processing apparatus 2 thus reduces both the jerkiness degradation and the blur degradation.

Fig. 4 illustrates an image processing apparatus 3 having the third structure. The image processing apparatus 3 includes a motion blur correction processor 13A instead of the motion blur correction processor 13 included in the image processing apparatus 2 illustrated in Fig. 3. The rest of the image processing apparatus 3 is identical in structure to the image processing apparatus 2. The motion blur correction processor 13A includes the motion blur reduction processor 32, the motion blur addition processor 33, and a selector and synthesizer 35. The motion blur reduction processor 32 performs the motion de-blur process on all the partition areas of the input image data. The motion blur addition processor 33 performs the motion ad-blur process on all the partition areas of the input image data.

The selector and synthesizer 35 receives from the motion blur reduction processor 32 the image data at all the partition areas that have undergone the motion de-blur process. The selector and synthesizer 35 receives from the motion blur addition processor 33 the image data at all the partition areas that have undergone the motion ad-blur process. The selector and synthesizer 35 also receives the input image data (image data not motion blur corrected). In response to the motion blur correction parameter, the selector and synthesizer 35 selects the motion blur reduced data, the motion blur added data, or the uncorrected data. The selector and synthesizer 35 synthesizes the selected data at each partition area, thereby generating and outputting the image data of one frame. Prior to the correction process, the sorting unit 31 in each of the first and second basic structures selects the correction process to be performed. In contrast in the third basic structure illustrated in Fig. 4, the motion de-blur process and the motion ad-blur process are performed on all the partition areas, and then the image data at an appropriate correction state is selected and output as output image data.

In one option, the image processing apparatus 3 illustrated in Fig. 4 may have the same structure as the image processing apparatus 2 illustrated in Fig. 3 except the motion blur correction processor 13A. In another option, the image processing apparatus 3 may have the same structure as the image processing apparatus 1 illustrated in Fig. 1 except the motion blur correction processor 13A.

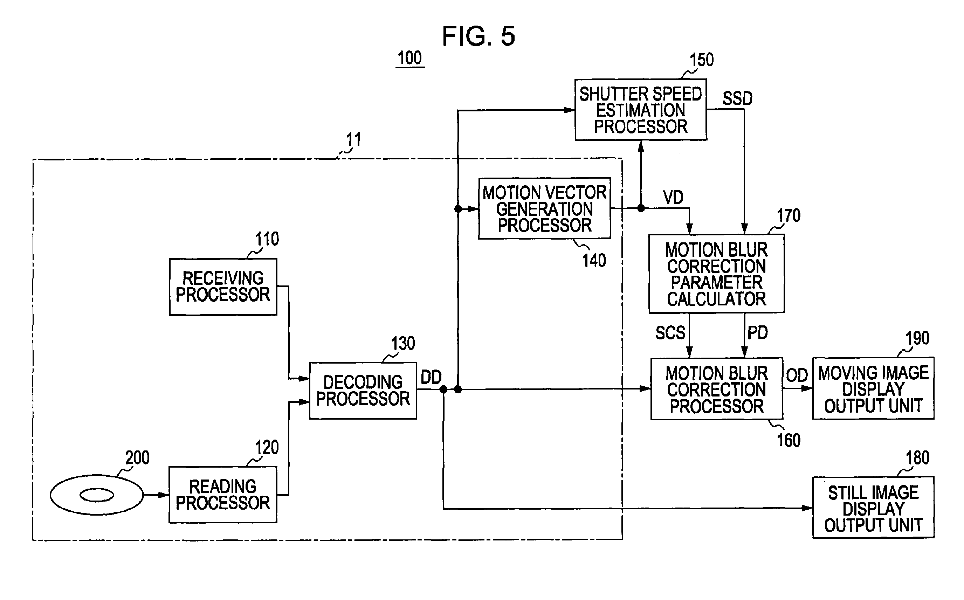

The image processing apparatus 2 having the second basic structure in accordance with one embodiment of the present invention is described further in detail. The image processing apparatus 1 having the first basic structure can be considered to be a particular version of the image processing apparatus 2 in which the imaging shutter speed information is available. The discussion that follows focuses on the image processing apparatus 2. The image processing apparatus 1 is also considered to be a particular version of the image processing apparatus, discussed with reference to Fig. 5 and subsequent drawings, without element for the shutter speed estimation process. The third basic structure will be further described later.

Fig. 5 illustrates an image reproducing apparatus 100 to which the image processing apparatus 2 having the second basic structure is applied. The image reproducing apparatus 100 receives and reproduces image data transmitted via a transmission line, or reproduces image data recorded on a recording medium 200, such as digital versatile disc (DVD) or Blu-ray Disc (Registered Trademark of Sony Corporation).

Referring to Fig. 5, the image reproducing apparatus 100 includes a receiving processor 110 receiving encoded image data transmitted via a transmission line, and a reading processor 120 reading encoded image data from the recording medium 200. The image reproducing apparatus 100 also includes a decoding processor 130 decoding the encoded data into image data DD, and a motion vector generation processor 140 generating a motion vector VD from the decoded image data DD. The image reproducing apparatus 100 also includes a shutter speed estimation processor 150 estimating a shutter speed SSD of the image data at the image capturing, using the decoded image data DD and the motion vector VD, and a motion blur correction parameter calculator 170. The image reproducing apparatus 100 further includes a motion blur correction processor 160 correcting a motion blur quantity of the decoded image data DD in accordance with the motion vector VD and the shutter speed SSD. The image reproducing apparatus 100 also includes a moving image display output unit 190 that causes a display device to display a moving image that has the jerkiness degradation thereof reduced with a motion blur added. The image reproducing apparatus 100 further includes a still image display output unit 180 that causes the display device to display a decoded image as a still image.

The receiving processor 110, the reading processor 120, the decoding processor 130, and the motion vector generation processor 140, enclosed in an dot-and-dash chain lined box, correspond to the image acquisition unit 11 in the third basic structure illustrated in Fig. 3. The shutter speed estimation processor 150 corresponds to the shutter speed estimation processor 14 illustrated in Fig. 3. The motion blur correction parameter calculator 170 corresponds to the motion blur correction parameter calculator 12 illustrated in Fig. 3. The motion blur correction processor 160 corresponds to the motion blur correction processor 13 illustrated in Fig. 3.

Referring to Fig. 5, the receiving processor 110 and the reading processor 120 retrieve image data predictive coded in accordance with image motion information such as moving picture experts group (MPEG), and supplies the image data to the decoding processor 130. The image data retrieved as a moving image by the receiving processor 110 and the reading processor 120 has a unit time of 1 second, and contains 60 frames of images per unit time. More specifically, the image data is a progressive unit image of a frame rate of 60 frames per second (fps). The image data is not limited to the progressive image. The image data may be an interlace image that is processed on a field image unit basis. The frame rate is not limited to 60 fps.

The image reproducing apparatus 100 may have at least one of the receiving processor 110 and the reading processor 120 to perform an image data retrieval function for retrieving an image from the outside. In addition to the image data retrieval function, the image reproducing apparatus 100 may acquire the shutter speed information contained as metadata of the image data. In such a case, the image reproducing apparatus 100 becomes similar to the image processing apparatus 1 having the first basic structure, and does not use the shutter speed estimation processor 150 for estimating the shutter speed SSD at the image capturing.

The decoding processor 130 decodes the image data retrieved from one of the receiving processor 110 and the reading processor 120. The decoding processor 130 then supplies the decoded image data DD to each of the motion vector generation processor 140, the shutter speed estimation processor 150, and the motion blur correction processor 160. When the decoded image data DD is processed as a still image, the decoding processor 130 supplies the decoded image data DD to the still image display output unit 180 only, and is free from handling the image data as a moving image.

The motion vector generation processor 140 generates the motion vector VD as the motion information of the decoded image data DD from the decoded image data DD supplied from the decoding processor 130. The motion vector herein is information representing a position of a moving image between frames and a movement direction of the moving image. The motion vector can be generated by pixel to acquire the motion information of a moving object at a high accuracy level. The motion vector generation processor 140 of one embodiment of the present invention generates the motion vector by pixel block to reduce the calculation load on the process. The frame image is here divided into a plurality of pixel blocks.

The image data encoded in accordance with the MPEG standard or the like contains a motion vector as encoding information. In accordance with one embodiment of the present invention, the use of the motion vector as the encoding information is possible and useful from the standpoint of the reduction of workload. The motion vector for encoding serves as information to encode primarily a moving image. The encoding process is performed in combination with residual information or the like in addition to the motion vector, and the motion vector does not necessarily faithfully represent a value responsive to a motion of an actual moving object over the entire image. In accordance with one embodiment of the present invention, the motion vector generation processor 140 detects accurately a motion vector responsive to a motion of an actual moving object in a decoded image through a process step to be discussed later. The motion vector generation processor 140 thus adds a motion blur faithful to the motion of the actual moving object.

The shutter speed estimation processor 150 estimates the shutter speed SSD at the image capturing of the image data from the decoded image data DD supplied from the decoding processor 130. The shutter speed estimation process is performed as a process in which the motion vector VD supplied from the motion vector generation processor 140 is used as will be described later. The shutter speed information here is information related to a shutter speed that affects a motion blur to be added to the captured image of the image data. More specifically, the shutter speed information represents an exposure time of unit image taken when an imaging apparatus having a shutter function captures the image data. The shutter function may be performed by one of an electronic shutter controlling a drive time of an imaging element, a mechanical shutter that allows light to pass through a lens to the imaging element by opening a closing mechanism for an exposure time, and a liquid-crystal shutter that allows light to pass through a lens to an imaging element by controlling the transmittance ratio of a liquid-crystal element for an exposure time in the imaging apparatus.

In a process to be specifically discussed later, the motion blur correction parameter calculator 170 calculates the motion blur correction parameter in accordance with the shutter speed SSD supplied from the shutter speed estimation processor 150, and the motion vector VD supplied from the motion vector generation processor 140, and then supplies the calculated motion blur correction parameter to the motion blur correction processor 160.

In a process to be specifically discussed later, the motion blur correction processor 160 performs the motion blur correction process based on the decoded image data DD supplied from the decoding processor 130 and the motion blur correction parameter supplied from the motion blur correction parameter calculator 170. The motion blur correction process may be interpreted as a process to convert the partition areas of the decoded image data DD into a pseudo image that is captured at an optimum shutter speed. The optimum shutter speed is intended to reduce the generation of jerkiness and blur in response to a movement speed of each partition area contained in the motion vector VD. In this case, the motion blur correction processor 160 references the shutter speed SSD of an input image signal prior to the conversion operation. If the optimum shutter speed in each partition area is lower than the shutter speed SSD, the motion blur correction processor 160 performs the motion ad-blur process. Conversely, if the optimum shutter speed in each partition area is higher than the shutter speed SSD, the motion blur correction processor 160 performs the motion de-blur process. The motion blur correction processor 160 synthesizes images having respectively converted partition areas into one frame, thereby generating an output image signal OD. The output image signal OD is output to the moving image display output unit 190.

The moving image display output unit 190 outputs to a display device such as a liquid-crystal display (LCD) a moving image that has been motion blur corrected with the jerkiness degradation and the blur degradation reduced by the motion blur correction processor 160. The still image display output unit 180 outputs to the display device such as the LCD the decoded image data DD received from the decoding processor 130 as a still image.

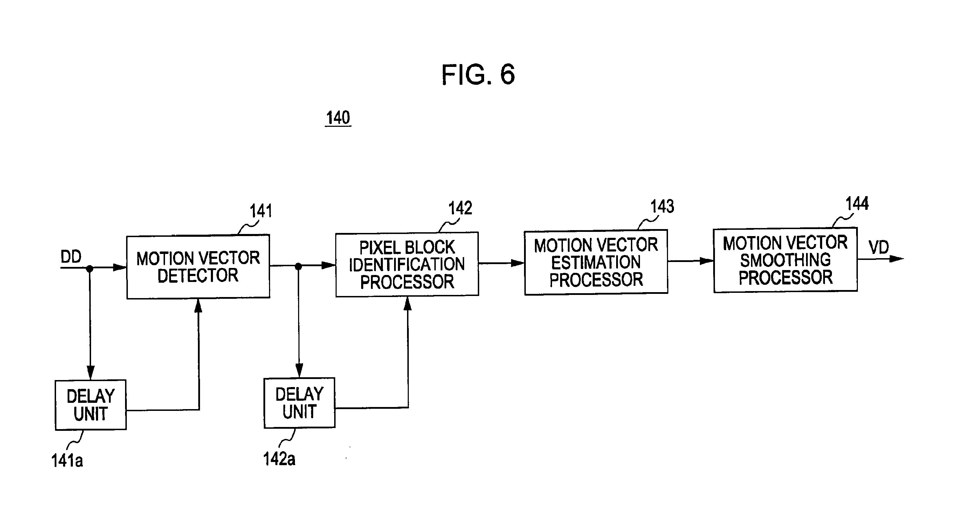

The elements illustrated in Fig. 5 are described in detail. A structure and operation of the motion vector generation processor 140 are described first. The motion vector generation processor 140 generates accurately the motion vector on a per pixel block basis. With reference to Fig. 6, the motion vector generation processor 140 includes a motion vector detector 141, a pixel block identification processor 142, a motion vector estimation processor 143, a motion vector smoothing processor 144, and delay units 141 a and 142a.

The motion vector detector 141 detects a motion vector from a process target frame and an immediately preceding frame. The pixel block identification processor 142 identifies a pixel block having a high correlation by comparing the motion vector of the process target frame with the motion vector of the immediately preceding fame on a per pixel block basis. The motion vector estimation processor 143 estimates the motion vector of a pixel block other than the pixel block identified by the pixel block identification processor 142, based on the motion vector of the pixel block identified by the pixel block identification processor 142. The motion vector smoothing processor 144 performs a smoothing process on the motion vector.

The decoded image data DD supplied from the decoding processor 130 is supplied to the motion vector detector 141, and the delay unit 141a delaying the decoded image data DD by one frame. The motion vector detector 141 sets the decoded image data DD supplied from the decoding processor 130 as a process target frame. The motion vector detector 141 then detects the motion vector of each process target frame on a per pixel block basis based on the process target frame and the immediately preceding frame that is delayed by one frame by the delay unit 141a. If the process of the motion vector detector 141 is implemented in software, the motion vector may be detected on a pixel block basis using a typically available block matching method.

The motion vector detected by the motion vector detector 141 is supplied to the pixel block identification processor 142 and the delay unit 142a. The delay unit 142a delays the input motion vector by one frame. On a per pixel block basis, the pixel block identification processor 142 compares the motion vector of the process target frame supplied from the motion vector detector 141 with the motion vector of the immediately preceding frame delayed by the delay unit 142a as described below. From the comparison results, the pixel block identification processor 142 identifies a pixel block having a high correlation.

More specifically, the pixel block identification processor 142 calculates a vector correlation coefficient σ of that pixel block in accordance with the following equation (1).

$$\sigma = \begin{cases} 1 : \begin{cases} \begin{cases} \alpha \times x < x' < (2-\alpha) \times x \\ \& \\ \alpha \times y < y' < (2-\alpha) \times y \\ \ddots \\ (case)\, x = 0 \\ -(1-\alpha) \times y < x' < (1-\alpha) \times y \\ (case)\, y = 0 \\ -(1-\alpha) \times x < y' < (1-\alpha) \times x \end{cases} \\ 0 : Others \end{cases} \end{cases}$$

... (1)

where let (x,y) represent the motion vector of one pixel block of the process target frame, (x',y') represent the motion vector of a pixel block of the immediately preceding frame corresponding to the first block, and α represent any correlation determination coefficient.

The correlation determination coefficient α has a range of 0<α<1. The larger the correlation determination coefficient α, the more the calculated vector correlation coefficient σ is likely to be 1.

The pixel block identification processor 142 calculates the vector correlation coefficient σ of each pixel block in accordance with equation (1), and identifies a pixel block having 1 for the vector correlation coefficient σ as a motion vector having a high correlation.

The motion vector estimation processor 143 estimates, from the motion vector of the pixel block determined as having a vector correlation coefficient σ of 1 by the pixel block identification processor 142, a motion vector of a pixel block having a vector correlation coefficient σ of 0. On the premise that the pixel block determined as having a vector correlation coefficient σ of 1 by the pixel block identification processor 142 has an effective motion vector, the motion vector estimation processor 143 updates the motion vector of another pixel block, i.e., a pixel block having the vector correlation coefficient σ thereof being zero and thus determined as having an ineffective motion vector.

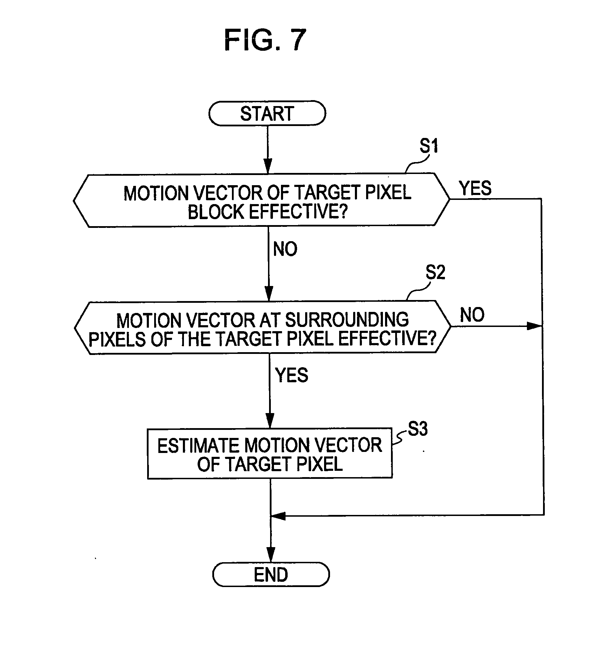

The process of the motion vector estimation processor 143 is specifically described with reference to Fig. 7. In step S1, the motion vector estimation processor 143 determines whether the vector correlation coefficient σ of a pixel block serving currently as a target pixel block in the process target frame is 1 or 0. More specifically, the motion vector estimation processor 143 determines whether the motion vector of the pixel block is effective or not. If it is determined in step S1 that the motion vector of the pixel block is effective, the motion vector estimation processor 143 ends the process without updating the value of the motion vector. If it is determined in step S1 that the motion vector of the pixel block is not effective, the motion vector estimation processor 143 proceeds to step S2.

In step S2, the motion vector estimation processor 143 determines on the target pixel block whether a surrounding pixel block having an effective motion vector is present around the target pixel block. More specifically, the motion vector estimation processor 143 determines eight pixel blocks next to the target pixel block as surrounding pixel blocks contain an effective motion vector. If an effective motion vector is present, the motion vector estimation processor 143 proceeds to step S3. If there is not any effective motion vector, the motion vector estimation processor 143 does not update the motion vector of the target pixel block, and ends the process thereof.

Because of the following reasons, the estimation process is not performed on the surrounding blocks present within a larger area with respect to the target pixel block having no effective motion vector. Firstly, the estimation process can be performed on the surrounding blocks present within a larger area at any rate. However, if the estimation process is performed on the surrounding blocks present within a larger area, a storage area storing temporarily the image data handled as the surrounding blocks is increased in capacity to complete the process within a fixed time. Secondly, in the later portion of the process of Fig. 6, ineffective motion vectors may be corrected by performing a smoothing process on the motion vector of the target pixel block using the surrounding pixel blocks larger in area than the eight adjacent pixel blocks.

In step S3, the motion vector estimation processor 143 estimates and updates the motion vector of the target pixel block based on the motion vectors of the surrounding pixel blocks having the effective motion vectors. The motion vector estimation processor 143 thus ends the process. In one example of the estimation process, the motion vector estimation processor 143 includes a median filter. The median filter receives the motion vectors of the surrounding pixel blocks having the effective motion vectors, and outputs a smoothed motion vector of the surrounding pixel blocks.

The motion vector estimation processor 143 thus estimates the motion vector of the process target frame on a pixel block basis. The motion vector estimation processor 143 thus supplies the motion vectors including the motion vector identified by the pixel block identification processor 142 to the motion vector smoothing processor 144.

The motion vector smoothing processor 144 performs a smoothing process on the motion vectors of the pixel blocks forming a process target image. More specifically, the motion vector smoothing processor 144 receives as an input I(x+i,y+j) the motion vector of the target pixel block prior to the smoothing process, and the motion vector of a surrounding pixel blocks larger than in area than the above-described adjacent pixel blocks, and outputs a motion vector J(x,y) of the target pixel block that has smoothed through a Gaussian function described in the following equation (2):

$$J(x,y) = \left( \frac{\sum I(x+i,y+j) * e^{-\frac{r^2}{2\sigma^2} - \frac{(I(x+i,y+j)-I(x,y))^2}{t^2}}}{\sum e^{-\frac{r^2}{2\sigma^2} - \frac{(I(x+i,y+j)-I(x,y))^2}{t^2}}} \right)$$

... (2)

where r represents a distance in a two-dimensional space between the target pixel block and each surrounding pixel block, $\sigma 2$ represents a variance of the distance r, and $t2$ represents a variance of the motion vector. More specifically, $\sigma 2$ and $t2$ are parameters to any values representing the degree of smoothing.

The motion vector smoothing processor 144 performs the above-described smoothing process on each pixel block forming the process target frame, and outputs the resulting motion vector VD to the motion blur correction parameter calculator 170.

The motion vector smoothing processor 144 identifies a pixel block having an effective motion vector from pixel blocks forming the process target frame, and estimates another motion vector from the effective motion vector. The motion vector smoothing processor 144 can generate the motion vector responsive to the motion of an actual moving object. In the motion vector generation processor 140, the motion vector detected by the motion vector detector 141 may be supplied to the motion vector smoothing processor 144 in the smoothing process with the pixel block identification processor 142 and the motion vector estimation processor 143 skipped. Even in such a process, the motion vector generation processor 140 can provide a more accurate motion vector responsive to the motion of the moving object than when the above-described encoding information is used as the motion vector.

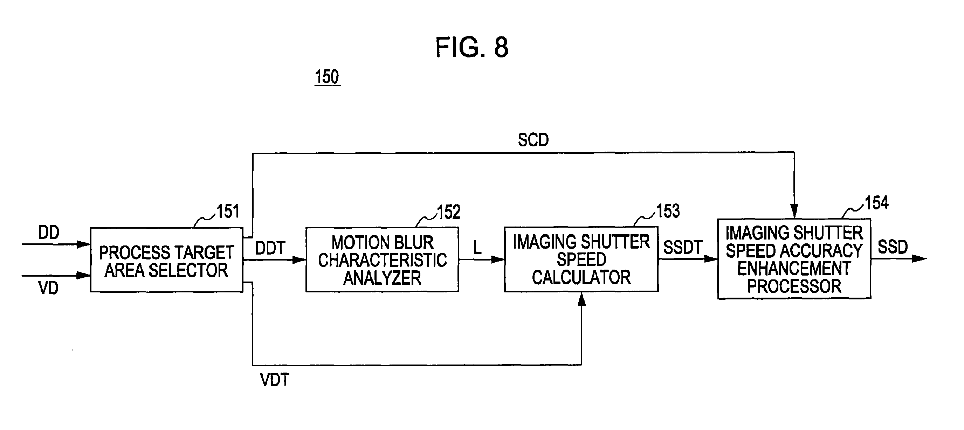

The specific structure of the shutter speed estimation processor 150 is described below with reference to Fig. 8. Fig. 8 is a block diagram illustrating the shutter speed estimation processor 150. The shutter speed estimation processor 150 includes a process target area selector 151, a motion blur characteristic analyzer 152, an imaging shutter speed calculator 153, and an imaging shutter speed accuracy enhancement processor 154. The shutter speed estimation processor 150 receives the decoded image data DD and the motion vector VD. The shutter speed estimation processor 150 image analyzes these pieces of input information, thereby estimating and outputting the shutter speed SSD at which the image data has been captured.

The decoded image data DD and the motion vector VD, input to the shutter speed estimation processor 150, are first received by the process target area selector 151. The process target area selector 151 selects a process target frame on which image analysis is to be performed in order to calculate the shutter speed. The process target area selector 151 also selects a target area within the selected frame. The process target area selector 151 then outputs the image data as a selected target area DDT and a motion vector VDT responsive to the target area DDT to subsequent stages. As will be described later, the target area DDT refers to the image data at an area that is extracted as a target of the shutter speed estimation process within one frame. The process target area selector 151 detects a scene change from the decoded image data DD input as a moving image, and then outputs the scene change detection signal SCD to the imaging shutter speed accuracy enhancement processor 154.

The process target area DDT is input to the motion blur characteristic analyzer 152. The motion blur characteristic analyzer 152 performs an image analysis process on the image data as the process target area DDT (i.e., image data that is within a pixel area serving as a process target area within one frame). The motion blur characteristic analyzer 152 calculates a "motion blur length L" generated in the process target area. The motion blur length L will be described later. The calculated motion blur length L is output to the imaging shutter speed calculator 153.

The imaging shutter speed calculator 153 calculates an estimation imaging shutter speed SSDT based on the value of the motion blur length L generated in the process target area DDT and the motion vector VDT responsive to the process target area. The estimation imaging shutter speed SSDT is an estimated value of the shutter speed at the image capturing. The calculated estimation imaging shutter speed SSDT is output to the imaging shutter speed accuracy enhancement processor 154. The imaging shutter speed accuracy enhancement processor 154 receives the estimation imaging shutter speeds SSDT estimated from a plurality of process target areas. In response to the values of these pieces of information, the imaging shutter speed accuracy enhancement processor 154 calculates a highly accurate, estimation imaging shutter speed SSD, and outputs the calculated estimation imaging shutter to the motion blur correction parameter calculator 170.

Motion blur characteristics serving as a basis of the process to be performed by the shutter speed estimation processor 150 are described before describing a process to be performed in each process block by the shutter speed estimation processor 150 of Fig. 8. The process of the shutter speed estimation processor 150 is a process to estimate a shutter speed from an image having an unknown shutter speed at the image capturing. The relationship of the generation of motion blur, a movement speed, and an imaging shutter speed is described first in order to describe the basic motion blur characteristic. The estimation method of the shutter speed taking into consideration the characteristics of a generated motion blur is then described.

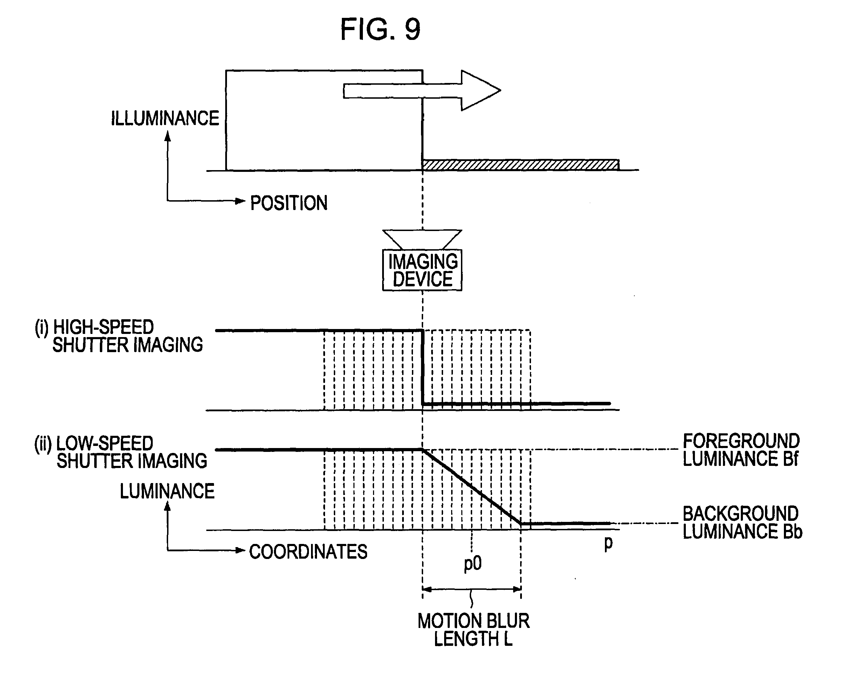

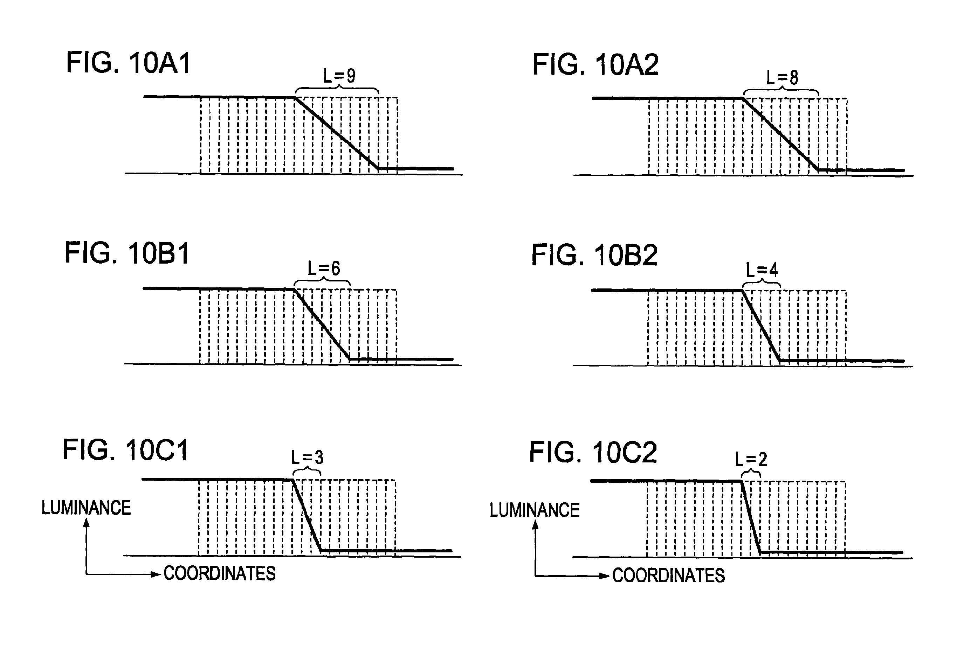

The relationship of the generation of motion blur, the movement speed, and the imaging shutter speed are briefly described with reference to Figs. 9 and 10. Fig. 9 illustrates the motion blur characteristics generated when an image is captured. The upper portion of Fig. 9 focuses on the relationship between a spatial position and brightness at a target area within the real space. As shown, the spatial position is plotted in the horizontal direction and illuminance is represented in the vertical direction. The foreground is moving in position from right to left at a constant speed. The bright foreground is overriding the dark background. The lower portion of Fig. 9 simulates an image signal, which has been obtained by image capturing the target area in the real space illustrated in the upper portion using an imaging apparatus illustrated in Fig. 9, in terms of the relationship between the coordinates of one line extending in the horizontal direction and brightness of the target area. As shown in the lower portion of Fig. 9, the coordinates of the image signal are plotted in the horizontal direction and luminance is plotted in the vertical direction. Broken lines represent pixels. The imaging apparatus here having a shutter function controls a shutter speed that is an exposure time throughout which an image is acquired.

An image signal labeled (i) in Fig. 9 is captured when an ideal high-speed shutter of the shutter function (with the exposure time being infinitesimal) is performed. An image signal labeled (ii) in Fig. 9 is captured when a low-speed shutter of the shutter function (with a predetermined exposure time) is performed. In comparison of the image signals (i) and (ii), the image signal (i) is a step function signal while the image signal (ii) is captured with light being integrated for a longer exposure time. The motion blur takes place in addition to the image signal (i). Fig. 9 illustrates that the motion blur in the vicinity of the outline of the moving object has low-pass filter characteristics. In the discussion that follows, an area having a luminance slope is defined as a motion blur area between luminance Bf of the illustrated foreground and an area where luminance Bb is recorded in a stable fashion. The motion blur length L is defined as a distance of the area in the horizontal direction.

Figs. 10A1, 10B1 and 10C1 illustrate the relationship between the movement speed of the object and the motion blur length L. Figs. 10A1, 10B1 and 10C1 illustrate the motion blur characteristics that are generated when the movement speed of the foreground in the upper portion of Fig. 9. The shutter speed at the image capturing remains constant in Figs. 10A1, 10B1 and 10C1.

Let A, B, and C represent the movement speeds of the foreground shown in Figs. 10A1, 10B1, and 10C1 , and the movement speeds are now related in magnitude as A:B:C=3:2:1. Referring to Figs. 10A1, 10B1 and 10C1, the motion blur lengths L are also related as 3:2:1 because L=nine pixels in Fig. 10A, L=six pixels in Fig. 10B, and L=three pixels in Fig. 10C. Since the image signal is recorded with light integrated for the same exposure time, the distance of travel of the object during the exposure time becomes a motion blur area. The motion blur length L generated in the vicinity of a pixel having a movement speed is thus proportional to the magnitude of the movement speed of the object.

Figs. 10A2, 10B2, and 10C2 illustrate the relationship of the imaging shutter speed and the motion blur length L. Figs. 10A2, 10B2, and 10C2 show the motion blur characteristics taking place when the shutter speed of the imaging apparatus is changed in the upper portion of Fig. 9. The movement speed of the foreground remains unchanged in Figs. 10A2, 10B2, and 10C2. If the imaging shutter speeds Figs. 10A2, 10B2, and 10C2 are now respectively "a," "b," and "c," the ratio of the imaging shutter speeds is a:b:c=4:2:1. The motion blur lengths L are related as 4:2:1 because L=eight pixels in Fig. 10A2, L=four pixels in Fig. 10B2, and L=two pixels in Fig. 10C2. Light is integrated during the exposure time of the image capturing. If the movement speed of the object to be picked up remains constant, the longer the exposure time, the more the motion blur area extends. The motion blur length L generated in the vicinity of a pixel having the movement speed is proportional to the magnitude of the shutter speed.

As described above, the motion blur length L is proportional to the movement speed of the object, and is also proportional to the imaging shutter speed.

Let L represent the motion blur length (pixels), V represent the movement speed of the object within the image signal (pixels/frame), S represent the imaging shutter speed (seconds), and F represent the frame rate of the moving image (frames/second), and the following equation (3) holds:

$$L = V \times S \times F \qquad \ldots \qquad (3)$$

In equation (3), VS is by the frame rate F because the movement speed V is an amount of distance within one frame period.

If the movement speed is 8 (pixels/frame), the imaging shutter speed is S=T in Fig. 10A2, the imaging shutter speed is S=T/2 in Fig. 10B2 and the imaging shutter speed is S=T/4 in Fig. 10A2, and the frame rate is F=1/T (T being a frame period (seconds)), the following relationship holds:

L=8xTx(1/T)= 8 (pixels) in Fig. 10A2,
L=8x(T/2)x(1/T)=4 (pixels) in Fig. 10B2, and
L=8xT(T/4)x(1/T)=2 (pixels) in Fig. 10C2.

The determined motion blur lengths are thus equal to the motion blur lengths L in Figs. 10A2, 10B2, and 10C2.

The relationship of the generation of motion blur, the movement speed and the imaging shutter speed has been discussed based on a simple example. Since the shutter speed estimation processor 150 is intended to estimate an unknown imaging shutter speed of an image, the above-described equation (3) is rearranged into equation (4):

$$S=L/(V \times F) \qquad \ldots \qquad (4)$$

In accordance with equation (4), the movement speed V of a target area in the image, and the frame rate F are known. An unknown shutter speed S at the image capturing is obtained if the motion blur length L is obtained.

In the following discussion, the process of each element in one example of the shutter speed estimation processor 150 illustrated in Fig. 8 is clarified, and the procedure of the shutter speed estimation is described. The estimation method of an imaging shutter speed from an image is not limited to this method. For example, in a method discussed below, the shutter speed at the image capturing is calculated by identifying the motion blur length L as defined above.

The decoded image data DD and the motion vector VD serving as the inputs to the shutter speed estimation processor 150 are first supplied to the process target area selector 151. The process target area selector 151 extracts an area (hereinafter referred to as a "target area") as a target of the image analysis in the shutter speed estimation, and outputs the process target area DDT and the motion vector VDT responsive to the process target area DDT to the subsequent stage. The process target area selector 151 performs the extraction process on the premise that the extraction process is not necessarily performed on all the areas of the frame in the input moving image signal having an area where the motion blur takes place. Any method may be used to select the target area serving the target of the analysis process.

The reasons why no problem arises with the estimation of the imaging shutter speed performed in only the limited area are described below. The shutter speed at the image capturing is typically uniform within one frame image. Furthermore, a smaller number of target areas to be processed is advantageous in terms of process costs.

If the shutter speed estimation process is performed on one target area within the frame, no shutter speed estimation is necessary on the other areas. As long as process costs permit, performing the shutter speed estimation process within a plurality of extracted target areas is greatly useful from the standpoint of accuracy enhancement of the shutter speed estimation. In accordance with one embodiment, a process to be described later is performed in a plurality of target areas from within one frame, and the imaging shutter speed SSD is estimated from a plurality of obtained results. If a plurality of shutter speeds are obtained, a process of increasing reliability is carried out by the subsequent stage, i.e., the imaging shutter speed accuracy enhancement processor 154. Such a process will be described later.

A method of selecting a target area of the analysis process from a given frame of the decoded image data DD is not limited to any one method. The target area is preferably in the vicinity of a border outline edge of an object illustrated in Fig. 9 and 10A1 through 10C2 in order to perform effectively the analysis process of the motion blur characteristics to be discussed in detail later. If the movement speed of a given area is zero, no motion blur takes place in that area. In the selection of the target area, movement speed information may be used so that an area having a predetermined movement speed is selected as a target area. If the direction of an edge is approximately perpendicular to the direction of the movement speed, the analysis process of the generated motion blur is easily performed. In summary, the area to be selected has a certain degree of movement speed, and is a target area close to the edge as perpendicular as possible to the direction of the movement speed.

When an analysis process is performed in the image processing, pixels are preferably picked up in a scan line direction in view of the process costs. The target area is thus conveniently extracted from a region close to a vertical edge having a horizontal movement speed. When the target area is selected, a motion blur characteristic analysis process to be discussed in detail later is performed along one line rather than across a plurality of lines. Focusing on the region close to the vertical edge having a horizontal movement speed, the use of only a sufficient number of pixels in a horizontal direction with respect to the movement speed serves the purpose of the motion blur characteristic analysis process to be discussed later.

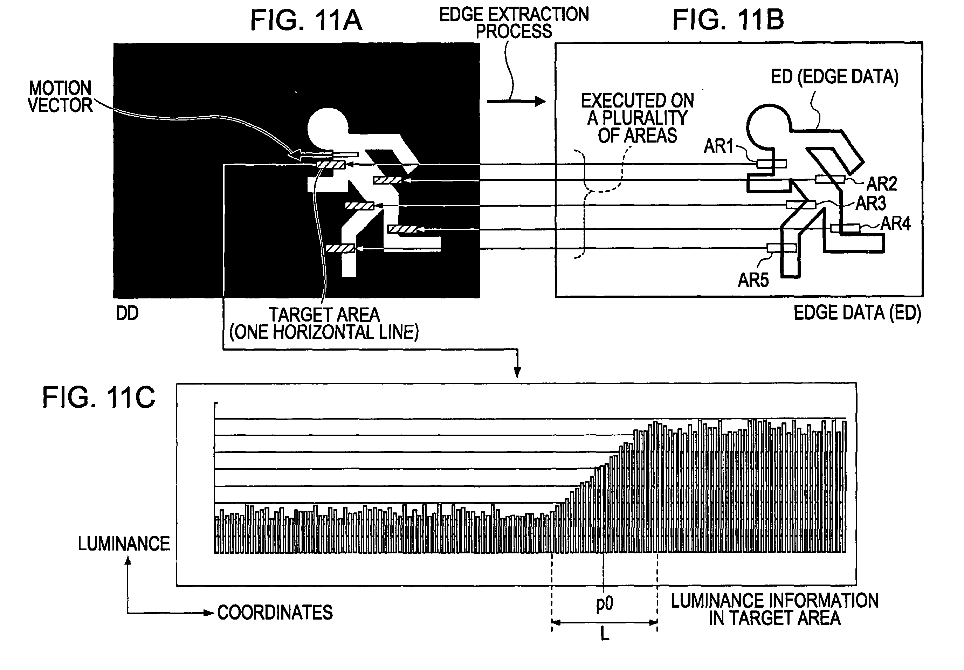

Figs. 11A-11C illustrate how the target area is selected. Fig. 11A illustrates one frame of the decoded image data DD. As discussed heretofore, an edge extraction process is performed on the decoded image data DD, for example, using the Sobel filter, and edge data ED illustrated in Fig. 11B is obtained. As previously discussed, one horizontal line in the vicinity of a vertical edge having a horizontal movement speed is selected. For example, areas AR1-AR5 are set to be target areas. The target areas AR1-AR5 may be a portion of each horizontal line. Luminance information of each target area is obtained as illustrated in Fig. 11C. In Fig. 11C, the abscissa represents coordinates of each pixel in the target area and the ordinate represents luminance.

The discussion heretofore is related to the selection process in one frame. No problem arises even if the selection process is not performed on the entire region of one frame. Likewise, it is not necessary to select all the target areas in the frame. This is because the moving image forming a plurality of frames typically has an imaging shutter speed remaining unchanged at least until a frame in which a scene change takes place. The imaging shutter speed estimated through analysis of one frame can be held at the value thereof until a next scene change is detected.

It suffices if the shutter speed estimation process is performed at least in one given frame within a period from the detection of a scene change to the detection of a next scene change. However, it is acceptable that a plurality of target areas are detected from within one frame, and that the shutter speed estimation process is performed in each of the target areas. Likewise, performing the shutter speed estimation process in a plurality of frames is particularly useful as long as process costs permit. This enhances the accuracy level of shutter speed estimation. The imaging shutter speed accuracy enhancement processor 154 performs a reliability enhancing process if a plurality of different shutter speed values are estimated.

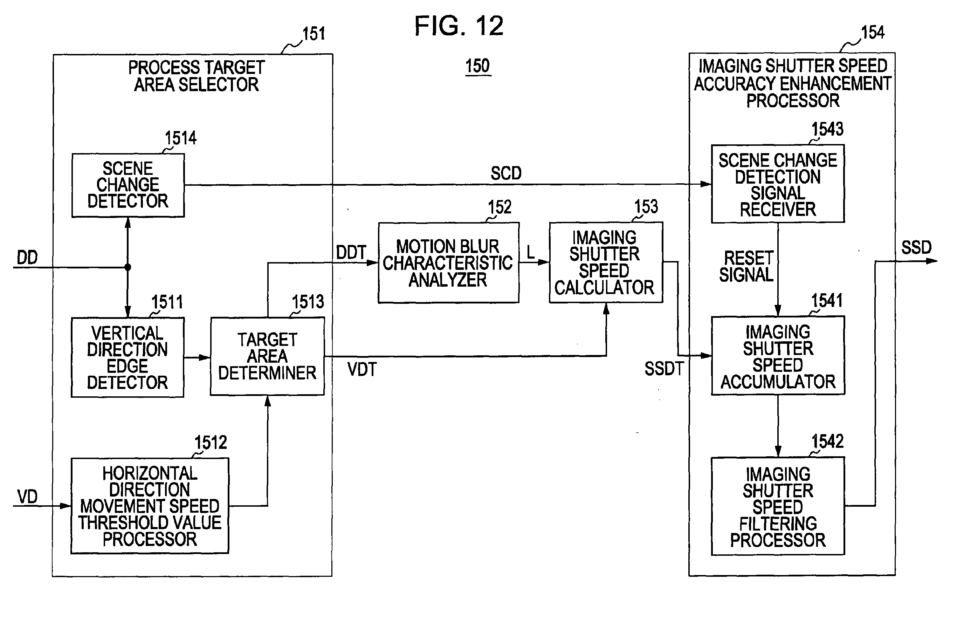

A target area selection process of the process target area selector 151 is specifically described with reference to Fig. 12. Fig. 12 illustrates, for operation description purposes, an internal functional structure of the process target area selector 151 and the imaging shutter speed accuracy enhancement processor 154 illustrated in Fig. 8.

Referring to Fig. 12, the process target area selector 151 includes a vertical direction edge detector 1511, a horizontal direction movement speed threshold value processor 1512, a target area determiner 1513, and a scene change detector 1514. In this arrangement, an area having a horizontal speed equal to or higher than a constant value in the vicinity of a vertical edge is extracted as a target area from within one frame, and the shutter speed estimation process is performed on only the extracted target area.

The vertical direction edge detector 1511 performs an edge detection process on each area within the frame of input decoded image data DD. In this case, only a vertical edge may be extracted using a direction selective mask process of the Sobel filter or the like. The input image data at an area determined as a vertical edge is output, as is, to the target area determiner 1513. An area not determined as a vertical edge is output to the target area determiner 1513 with all the pixel signals within that area set to "0." A motion vector VD is input to the horizontal direction movement speed threshold value processor 1512. To select an area having a horizontal speed equal to or higher than the constant value, a horizontal component of the motion vector of each area, represented by a horizontal component $VDx$, is objected to a threshold value process. If the horizontal component $VDx$ is larger than a predetermined threshold value TH ($VDx>TH$), the motion vector signal of the input area is output as is to the target area determiner 1513. If the horizontal component $VDx$ is equal to or lower than the threshold value TH ($VDx \leq TH$), all the motion vectors of the areas are set to "0," and then output to the target area determiner 1513.

The target area determiner 1513 determines that the area is a target of the shutter speed estimation process only if both the image data and the motion vector of the input area are not zero. Only in this case, the area is determined as the process target area DDT. As previously described, the process target area DDT is the image data of the area that is determined as a target. The target area determiner 1513 outputs the process target area DDT to the motion blur characteristic analyzer 152, and the motion vector VDT of the area to the imaging shutter speed calculator 153.

Each frame of the decoded image data DD input to the process target area selector 151 is supplied to the scene change detector 1514. The scene change detector 1514 performs a scene change detection process. Any scene change detection technique may be used. For example, the scene change detection technique disclosed in Japanese Unexamined Patent Application Publication No. 2004-282318 may be used. When a scene change is detected, the scene change detector 1514 outputs a scene change detection signal SCD to the imaging shutter speed accuracy enhancement processor 154.

As described above, the process target area selector 151 identifies the process target area DDT, and then outputs the process target area DDT to the motion blur characteristic analyzer 152. The process target area selector 151 also extracts the motion vector VDT responsive to the position of the process target area DDT and outputs the motion vector VDT to the imaging shutter speed calculator 153. The process of the motion blur characteristic analyzer 152 is described below. The analysis of the motion blur characteristics is a process of estimating the motion blur length L of the motion blur (see (ii) low speed shutter image in Fig. 9 and Fig. 11C).

Several methods are contemplated to determine the motion blur length L. Two main types of the method of determining the motion blur length L are described here. In a first method, the motion blur length L is estimated by defining a mathematical model of motion blur and finding a parameter in the mathematical model minimizing an error function to a motion blur occurring in an actual image signal. In a second method, the motion blur length L is estimated by matching a motion blur sample pattern prepared beforehand to a motion blur actually taking place in an image signal.

One example of the first method is described first. The motion blur length L is estimated by expressing in a mathematical model a luminance value close to an edge affected by a motion blur as disclosed in the paper entitled "Photometric Registration Based on Defocus and Motion Blur Estimation for Augmented Reality," Bunyo OKUMURA, Masayuki KANBARA, and Naokazu YOKOYA, The Institute of Electronics, Information and Communication Engineers, D Vol. J90-D No. 8 pp. 2126-2136. In accordance with the disclosed technique, let coordinates p represent each pixel in the vicinity of an edge and p0 represent coordinates (unknown) of a center position of a blur occurring in the vicinity of the edge, and variable t is expressed in the following equation (5):

$$t = 2*(p-p0)/L \qquad\qquad ... \qquad (5)$$

where the center position coordinates P0 is illustrated in (ii) low-speed shutter image in Fig. 9.

Using equation (5), function g(t) simulating the motion blur characteristics in the vicinity of the edge is defmed as equation (6):

$$g(t) = \frac{1}{2} + \frac{1}{\pi}\left(t\sqrt{1-t^2} + \arcsin t\right)$$

$$... \qquad (6)$$

To compare with the actual motion blur, the following equation (7) is used:

$$f(p; L; p0; Bf; Bb) = \begin{cases} Bf & (t < -1) \\ g(t)*(Bf - Bb) + Bb & (-1 \leqq t \leqq 1) \\ Bb & (t > 1) \end{cases}$$

$$... \qquad (7)$$

The luminance Bf of the foreground and the luminance Bb of the background in (ii) low-speed shutter image in Fig. 9 are used in equation (7).

Pixel coordinates p in the vicinity of the edge are substituted in equation (5), and parameters L, p0, Bf, and Bb minimizing a distance function to the value of the actual motion blur are found from equations (5), (6) and (7). The motion blur length L is thus estimated. To search for the four unknowns minimizing the distance function, a numerical analysis method such as quasi-Newton method may be used. The distance function is typically a comparison of squared values of differences, each between pixel values of an actual image and a function f, or a comparison of the linear sum of the absolute values of the differences, each between pixel values of an actual image and a function f. Taking into consideration imaging conditions, such as an optical low-pass filter and focus, as in equation (6), a function simulating a dominant motion blur characteristic is defined. The function may be a simple discontinuous function such as the one of (ii) low-speed shutter image signal in Fig. 9.

In a second method, the motion blur length L is estimated from a spatial frequency component in a target area in the vicinity of an edge selected as a target in the image signal as described above. As described with reference to Fig. 9, the motion blur generated in the vicinity of a pixel having a movement speed can be expressed as a low-pass filter. Taking advantage of the low-pass filter, the motion blur length L is estimated through matching of frequency analysis results.

As illustrated in Fig. 9, the characteristics of the motion blur are determined by the exposure time. If the movement speed is constant, the motion blurs having the same motion blur length should have the same frequency characteristics. For example, motion blur sample patterns having a variety of given motion blur lengths L are prepared as in (ii) image signal in Fig. 9 suffering from the motion blur during image capturing, a predetermined frequency analysis is performed on the image signals, and a frequency component of each sample pattern is stored. The frequency analysis method may be one of typical methods including Fourier transform and wavelet analysis. When the target area is input as a target of analysis, the same frequency analysis as the one performed on the sample pattern is performed on the target area, and the sample pattern having the frequency component closest to the frequency component of the target area is determined using an error function or the like. The motion blur length L of the sample pattern having the frequency component closest to the target area becomes the motion blur length L of an edge in the analysis target area.

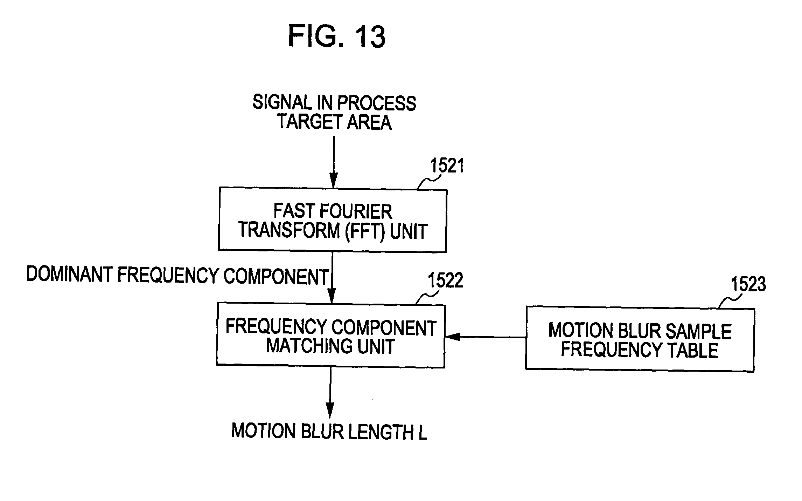

Fig. 13 illustrates a specific process flow of the estimation of the motion blur length L through matching frequency analysis results. The target area in the vicinity of the edge determined to be an analysis target is input to a fast Fourier transform (FFT) unit 1521. A fast Fourier transform (FFT) process is performed on the target area, and a dominant frequency component of the target area is output to a frequency component matching unit 1522. The frequency power spectrum is calculated as a result of the fast Fourier transform, and frequencies having top three power values are sent to the frequency component matching unit 1522. The frequency component matching unit 1522 searches a motion blur sample frequency table 1523 for a motion blur sample having a frequency pattern most similar to the dominant frequency component of the input target area, and outputs the motion blur length L of the hit sample.

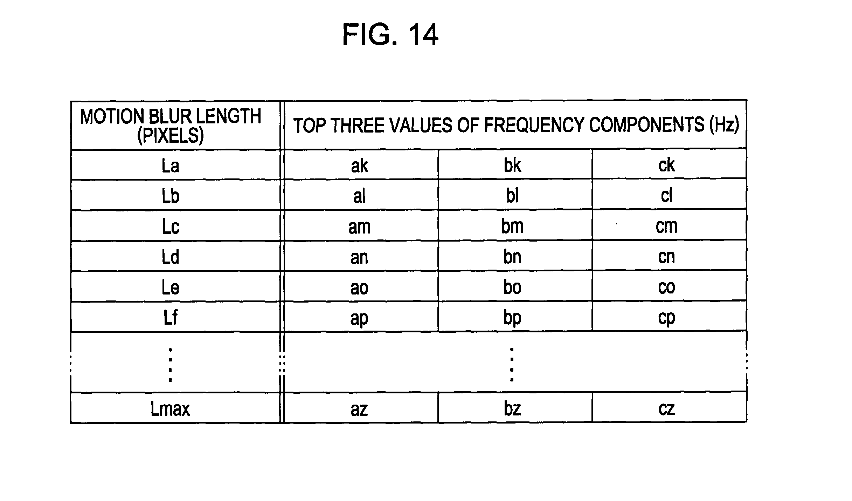

Fig. 14 illustrates an example of the motion blur sample frequency table 1523. As illustrated, the motion blur sample frequency table 1523 lists frequency components for each of the motion blur lengths L (La, ..., Lmax). The frequency component matching unit 1522 searches the lookup table of Fig. 14 for a sample having the frequency component most similar to the top three frequency components of the target area. To this end, a function evaluating an error is prepared. For example, evaluation of the error may be performed using a typical distance function that linearly sums squared differences. The motion blur length of the sample motion blur pattern determined is the sought motion blur length L.

The above-described estimation method of the motion blur length L of matching the motion blur sample pattern to the motion blur actually taking place in the image signal focuses on the spatial frequency component. It is also contemplated that the sample pattern and the area in the vicinity of the edge determined to be the analysis target are compared to each other in the real space. In other words, the sample motion blur pattern is stored as an image signal, and a sample motion blur pattern having a error function resulting in a minimum value to an actual image signal is searched for.

The motion blur characteristic analyzer 152 in the shutter speed estimation processor 150 estimates the motion blur length L using one of the above-described techniques, and outputs the resulting motion blur length L. The output motion blur length L is input to the imaging shutter speed calculator 153.

The imaging shutter speed calculator 153 determines the estimation imaging shutter speed SSDT based on the motion blur length L of the motion blur in the process target area DDT, and the motion vector VDT responsive to the process target area DDT. In other words, the process performed by the imaging shutter speed calculator 153 is merely solving equation (4). As previously described, the frame rate F in equation (4) is known. The movement speed V is a horizontal component of the motion vector VDT responsive to the process target area DDT, and is also known. The motion blur length L is estimated by the motion blur characteristic analyzer 152. The shutter speed S is easily determined by solving equation (4). The shutter speed S becomes the estimation imaging shutter speed SSDT to be output by the imaging shutter speed calculator 153.

Finally, the imaging shutter speed accuracy enhancement processor 154 generates and outputs the imaging shutter speed SSD. The imaging shutter speed accuracy enhancement processor 154 receives the estimation imaging shutter speed SSDT estimated by the imaging shutter speed calculator 153. In this case, estimation imaging shutter speeds estimated from a plurality of target areas are input. As previously discussed, the estimation process may be theoretically performed in one area selected from one frame within a period from the detection of one scene change to the detection of a next scene change. Performing the estimation process in a plurality of target areas within one frame as well as within a plurality of frames is useful to enhance estimation accuracy. For this reason, a plurality of estimation imaging shutter speeds SSDT may be used to generate the shutter speed SSD. If a plurality of different estimation imaging shutter speeds SSDT are estimated, a weight average or a median value of the speeds may be determined as the shutter speed SSD to be finally output. Process reliability is thus enhanced.

Operation of the imaging shutter speed accuracy enhancement processor 154 is described with reference to Fig. 12. The imaging shutter speed accuracy enhancement processor 154 illustrated in Fig. 12 includes an imaging shutter speed accumulator 1541, an imaging shutter speed filtering processor 1542, and a scene change detection signal receiver 1543.

The estimation imaging shutter speed SSDT calculated on the target area by the imaging shutter speed calculator 153, input to the imaging shutter speed accuracy enhancement processor 154, is received by the imaging shutter speed accumulator 1541. The imaging shutter speed accumulator 1541 accumulates the value of the estimation imaging shutter speeds SSDT. The imaging shutter speed filtering processor 1542 performs a predetermined filtering process using at least one of the values of the estimation imaging shutter speeds SSDT accumulated on the imaging shutter speed accumulator 1541.

As previously discussed, the filtering process is intended to enhance process reliability when a plurality of different estimation imaging shutter speeds SSDT are input. The filtering process may include an averaging operation, a weighted averaging operation, and a medium value detection operation. To reduce the data size of the estimation imaging shutter speed SSDT to be accumulated on the imaging shutter speed accumulator 1541, the use of an infinite impulse response (IIR) filter is advisable. With the IIR filter, it suffices if immediately preceding process results only are stored, and operation becomes efficient.

The scene change detection signal receiver 1543 receives the scene change detection signal SCD input from the scene change detector 1514 in the process target area selector 151. Upon receiving the scene change detection signal SCD, the scene change detection signal receiver 1543 determines that a scene change has taken place in the target frame, and thus determines that the imaging shutter speed has changed. The scene change detection signal receiver 1543 outputs a reset signal to the imaging shutter speed accumulator 1541, and deletes the estimation values of the imaging shutter speeds heretofore stored. The imaging shutter speed filtering processor 1542 calculates a highly reliable imaging shutter speed using the estimation value of the imaging shutter speed newly input to the imaging shutter speed accumulator 1541.

The process results of the imaging shutter speed filtering processor 1542 are output as the shutter speed SSD of the current frame or of the current scene (lasting from the detection of an immediately preceding scene change to the detection of a next scene change).

The serial operations of the shutter speed estimation method of the shutter speed estimation processor 150 have been discussed. The shutter speed SSD estimated through the above-described process is output to the motion blur correction parameter calculator 170.

The process of the motion blur correction parameter calculator 170 and the motion blur correction processor 160 illustrated in Fig. 5 is described below. The motion blur correction parameter calculator 170 and the motion blur correction processor 160 perform a filtering process on each partition area (see Fig. 2) of the decoded image data DD in response to the value of the motion vector VD input from the motion vector generation processor 140 while referencing the shutter speed SSD input from the shutter speed estimation processor 150. The motion blur correction parameter calculator 170 and the motion blur correction processor 160 output to the moving image display output unit 190 an output image with both jerkiness and blur reduced. The motion blur correction process performed by the motion blur correction parameter calculator 170 and the motion blur correction processor 160 includes the filtering process of reducing or adding the motion blur on a per partition area basis. The selection of the filtering process is adaptively performed in accordance with a technique to be discussed later.

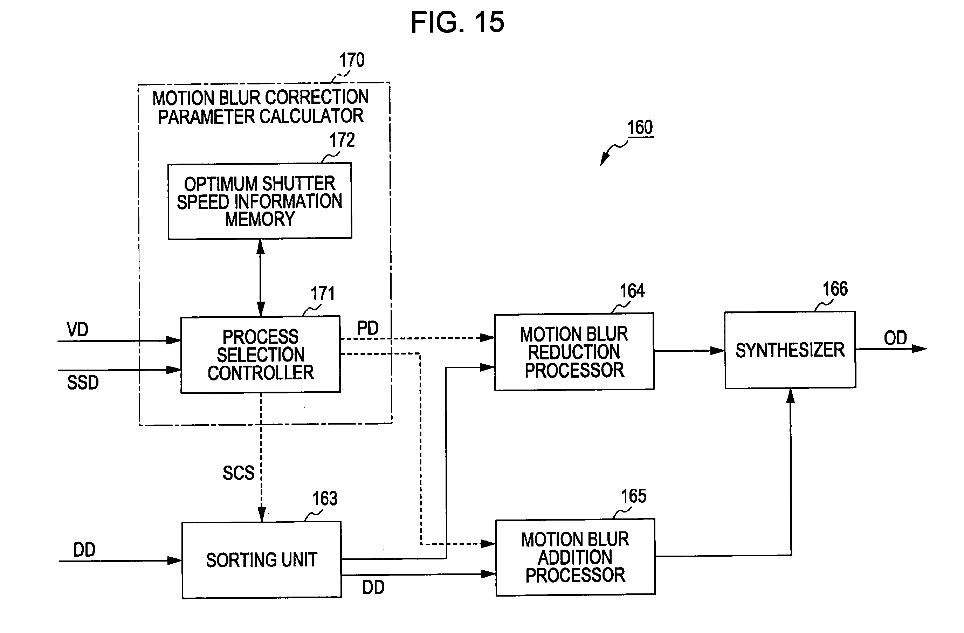

Fig. 15 illustrates a specific structure of the motion blur correction parameter calculator 170 and the motion blur correction processor 160. The motion blur correction parameter calculator 170 includes a process selection controller 171 and an optimum shutter speed information memory 172. The motion blur correction processor 160 includes a sorting unit 163, a motion blur reduction processor 164, a motion blur addition processor 165, and a synthesizer 166.

The motion vector VD output from the motion vector generation processor 140 and the shutter speed SSD output from the shutter speed estimation processor 150 are first received by the process selection controller 171. Using a motion vector value responsive to the partition area of the input motion vector VD, the process selection controller 171 references optimum shutter information stored on the optimum shutter speed information memory 172, and determines the shutter speed SSD0 of the partition area. The process selection controller 171 also compares the shutter speed SSD supplied from the shutter speed estimation processor 150 with the shutter speed SSD0 for evaluation. The process selection controller 171 thus determines whether the filtering process to be executed on the partition area is the motion de-blur process, the motion ad-blur process, or no motion blur correction at all. The process selection controller 171 then transfers the determination to the sorting unit 163.

The process selection controller 171 also outputs a filter parameter PD to the selected motion blur correction filtering blocks, i.e., the motion blur reduction processor 164 and the motion blur addition processor 165. The motion blur correction may be performed in either the motion de-blur process and the motion ad-blur process. The filter parameter PD is used to adjust the degree of such a process (in terms of amount and intensity).

The sorting unit 163 has already received the decoded image data DD, and outputs the decoded image data DD to one of the motion blur reduction processor 164 and the motion blur addition processor 165 on a per partition area basis in response to process selection control information SCS. Optionally, the sorting unit 163 may output the partition area where performance of a motion blur correction process is not necessary to the synthesizer 166 instead of supplying the partition area to one of the motion blur reduction processor 164 and the motion blur addition processor 165. The partition area where performance of a motion blur correction process is not necessary is processed by one of the motion blur reduction processor 164 and the motion blur addition processor 165 with the correction amount set to zero therewithin.

The motion blur reduction processor 164 performs on the image data of the partition area supplied from the sorting unit 163 the filtering process to reduce the motion blur quantity in a method to be discussed later, and outputs the resulting image data to the synthesizer 166. The motion blur addition processor 165 performs on the image data of the partition area supplied from the sorting unit 163 the filtering process to add the motion blur quantity in a method to be discussed later, and outputs the resulting image data to the synthesizer 166. The image data at the partition area having undergone the filtering process is output to the synthesizer 166. The synthesizer 166 then reconstructs the received image data into a frame image, and then outputs the frame image as the output image signal OD.

Processes of the elements illustrated in Fig. 15 are described below. In the course of discussion of the processes of the elements, the optimum shutter speed, the selection method of the motion blur reduction process (motion de-blur process) and the motion blur addition process (motion blur addition process), and the filtering process for the motion blur reduction and addition processes are specifically described. Such a discussion is helpful in the understanding of the process performed by the motion blur correction processor 160.

The process selection controller 171 first references the optimum shutter speed information stored beforehand on the optimum shutter speed information memory 172 using the value of the vector responsive to the partition area of the input motion vector VD, and determines the shutter speed SSD0 for the partition area. Before describing the process selection controller 171, the optimum shutter speed is described.

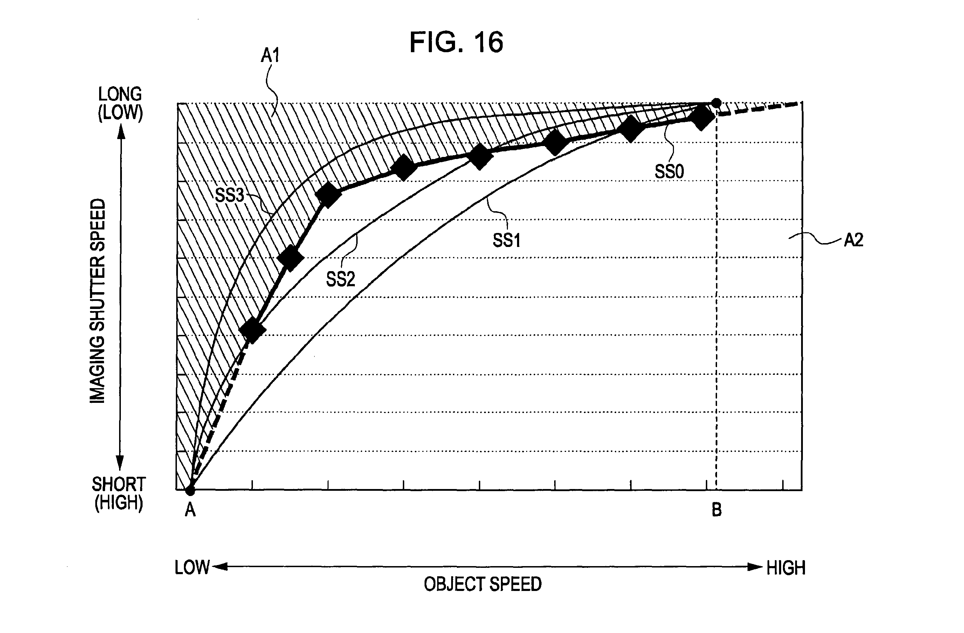

Fig. 16 illustrates an object speed indicating a movement speed of an object detected as a motion vector, and an optimum shutter speed curve responsive to the object speed. The optimum shutter speed responsive to a given movement speed is a value at which both the jerkiness degradation and the blur degradation are reduced if image capturing is performed at that shutter speed. More specifically, the optimum shutter speed is a shutter speed at which the jerkiness degradation is less visible in accordance with the vision characteristics in response to the movement speed of the object, and at which the blur degradation is also less visible. In the blur degradation, the object lacks a detail or sharpness with an excessive motion blur added. The higher the shutter speed value as the exposure time at the image capturing, the larger the motion blur quantity becomes. If the object is photographed at a shutter speed higher than the optimum shutter speed, the captured image may suffer from jerkiness. If the object is photographed at a shutter speed lower than the optimum shutter speed, the captured image may suffer from motion blur.

The optimum shutter speed information memory 172 pre-stores the optimum shutter speed information represented in Fig. 16. The optimum shutter speed information memory 172 uses the optimum shutter speed as a motion blur adjustment reference, thereby determining the content of the filtering process to adjust the motion blur quantity at subsequent stages. In other words, the filtering process performed by the subsequent stages, i.e., the motion blur reduction processor 164 and the motion blur addition processor 165, is interpreted as a process converting each area of the image into an image having a motion blur responsive to a "motion blur quantity captured at the optimum shutter speed."

The optimum shutter speed curve SSO in Fig. 16 illustrates a relationship between any object speed and the optimum shutter speed, more specifically, is a curve connecting results of a psychological experiment. A motion blur region A1 illustrated in Fig. 16 is determined as having an excess degree of motion blur caused by a motion of the object in accordance with the optimum shutter speed curve SSO. Similarly, a jerkiness region A2 is determined as having no motion blur caused by the motion of the object in accordance with the optimum shutter speed curve SSO and having a jerkiness degradation in vision characteristics. In order to determine an optimum shutter speed responsive to the motion vector using the optimum shutter speed curve SSO, the optimum shutter speed information responsive to the motion vector in steps of any value is pre-stored on the optimum shutter speed information memory 172 as a table and then referenced.

In accordance with one embodiment of the present invention, the optimum shutter speed responsive to the motion vector may be calculated using a function similar to the optimum shutter speed curve denoted by the solid line in Fig. 16. The process selection controller 171 calculates a shutter speed SSD' in accordance with an approximate function of the optimum shutter speed curve of the following equation (8):

$$SSD'=\left(\frac{v-A}{B-A}\right)^{\gamma}\times(v-A)+A$$

$$\ldots\quad(8)$$

where v represents the motion vector of a given partition area, and parameters A, B, and $\gamma$ are set to appropriate values in accordance with the optimum shutter curve illustrated in Fig. 16. Fig. 16 illustrates, as specific examples, curves SS1-SS3 with the parameters A and B of the parameters of equation (8) set to fixed values, and $\gamma$ changed at three steps.

SS0 represents the optimum shutter speed curve produced on the basis of the value obtained from an objective evaluation experiment, SS1-SS3 are optimum shutter speed curves approximating the optimum shutter speed curve SSO in accordance with equation (8). SS1-SS3 may be used to adjust the optimum shutter speed curve in accordance with a preference of a user of the apparatus.

A format of the data stored on the optimum shutter speed information memory 172 is not only a graph in Fig. 16 and a mathematical expression such as equation (8) but also a table listing quantized values of the optimum shutter speed curve. The optimum shutter speed minimizing the jerkiness degradation and the blur degradation has been described.

Described below is the determination method of the optimum shutter speed SSD0 in the partition area performed by the process selection controller 171. The process selection controller 171 performs the determination method on the premise that the optimum shutter speed information memory 172 stores the optimum shutter speed information in the form of graph illustrated in Fig. 16.

A movement speed AVT of the partition area represents the absolute value of the vector value responsive to the partition area of the motion vector VD. The value of the movement speed AVT is plotted as a point in the abscissa of the graph in Fig. 16. A point corresponding to that point in the abscissa is then found on the curve of interest. Then, a value in the ordinate corresponding to the point in the curve is read. The read value is the optimum shutter speed SSD0 in the partition area.

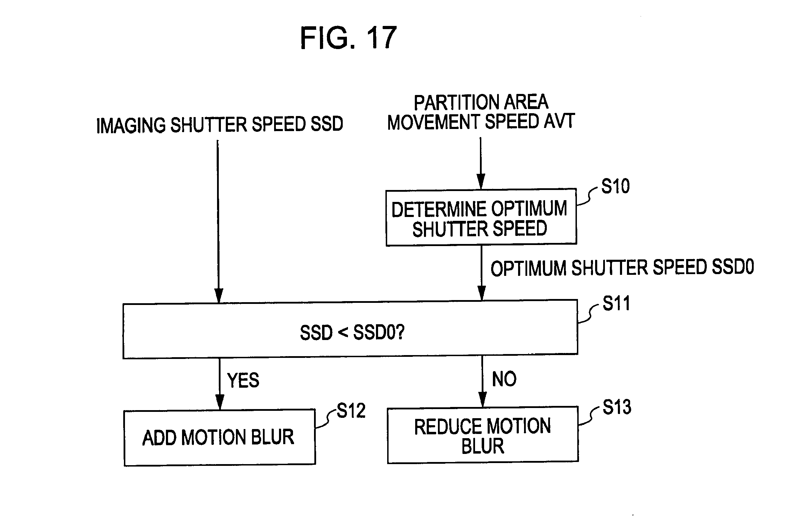

Fig. 17 illustrates a process flow of the process selection controller 171. In step S10, the process selection controller 171 determines the optimum shutter speed SSD0 of the partition area in the manner described above. In step 511, the process selection controller 171 compares the determined optimum shutter speed SSD0 with the optimum shutter speed SSD input to the process selection controller 171. The comparison results determine whether the filtering process to be performed on the partition area is the motion de-blur process or the motion ad-blur process. The criterion of the selection process is that if the optimum shutter speed in the partition area is lower than the imaging shutter speed SSD, the motion ad-blur process is to be performed (step S12), and that if the optimum shutter speed is higher than the imaging shutter speed SSD, the motion de-blur process is to be performed (step S13).

With reference to Fig. 15, the process selection controller 171 outputs the filter parameter PD to the selected motion blur correction filtering blocks, namely, the motion blur reduction processor 164 and the motion blur addition processor 165. The filter parameter PD is used to adjust the degree of selected one of the motion de-blur process and the motion ad-blur process (in terms of amount and intensity). In accordance with the present embodiment, in particular, a shutter speed difference SSDD between the imaging shutter speed of each partition area and the optimum shutter speed, and the motion vector VD are supplied as the filter parameter PD to each of the motion blur reduction processor 164 and the motion blur addition processor 165. The shutter speed difference SSDD is calculated by the process selection controller 171 at the comparison and evaluation phase that is performed when it is determined whether the motion blur correction process is the motion de-blur process or the motion ad-blur process. If the shutter speed difference SSDD is calculated from an equation of SSDD=SSD-SSDO, the motion de-blur process is performed in response to a positive shutter speed difference SSDD or the motion ad-blur process is performed in response to a negative shutter speed difference SSDD.

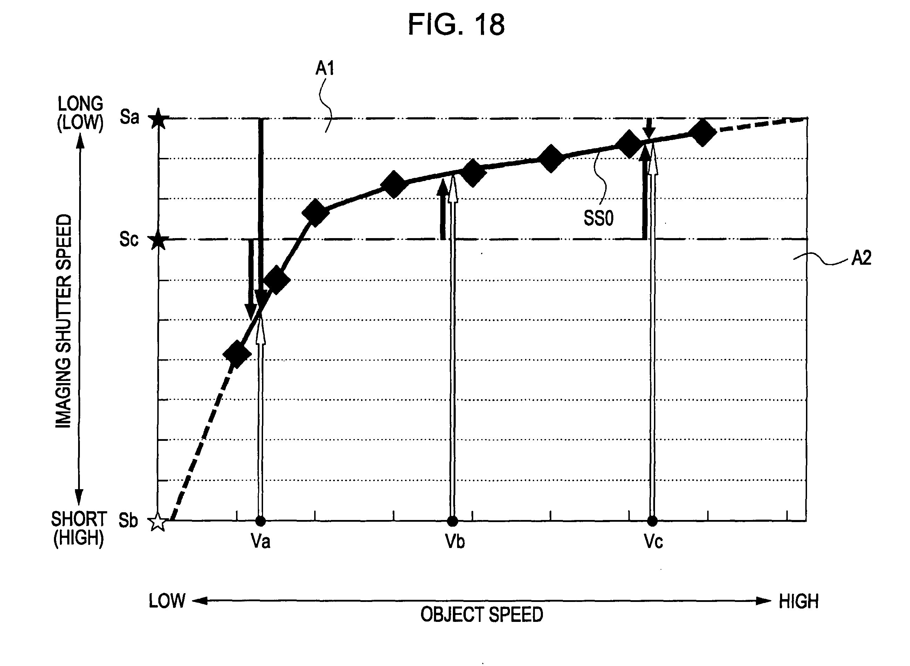

Fig. 18 illustrates the imaging shutter speed and the object speed (the speed of the object) illustrated in Fig. 16 with a specific example added thereto. With reference to the example, the selection as to whether the motion de-blur process or the motion ad-blur process is to be performed as the filter process is specifically described. Also, the operation of each of the two filtering processes is described below. Fig. 18 illustrates imaging shutter speeds Sa-Sc as examples of the shutter speed at the image capturing and the object speeds Va-Vc as the movement speed of the object. For convenience of explanation in the discussion that follows, only SSO is selected as the optimum shutter speed curve from the curves illustrated in Fig. 16. It is acceptable that any of the curves SS0-SS3 is selected.

A motion blur quantity adjustment process is described in each of three values Sa, Sb, and Sc of imaging shutter speed with reference to Fig. 18.

The imaging shutter speed Sa means an open shutter speed. The optimum shutter speed is higher than the actual shutter speed Sa in each of all the object speeds Va, Vb, and Vc. For this reason, the de-blur process as the motion blur reduction process is performed in order to generate an image having the degree of motion blur that is otherwise caused at the optimum shutter speed. The process selection controller 171 thus outputs to the sorting unit 163 the process selection control information SCS indicating that the motion de-blur process has been selected. The sorting unit 163 outputs the signal of each partition area in the input decoded image data DD to the motion blur reduction processor 164.

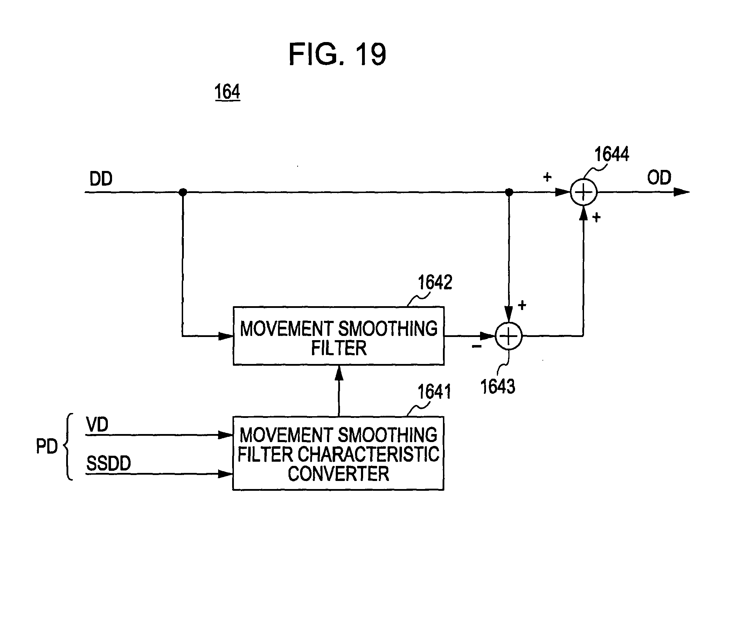

The motion de-blur process performed by the motion blur reduction processor 164 is specifically described below. Fig. 19 illustrates a structure of the motion blur reduction processor 164. The motion blur reduction processor 164 includes a smoothing filter characteristic converter 1641, a smoothing filter 1642, a subtractor 1643, and an adder 1644. The motion blur reduction processor 164 reduces the motion blur quantity of each partition area of the input decoded image data DD.

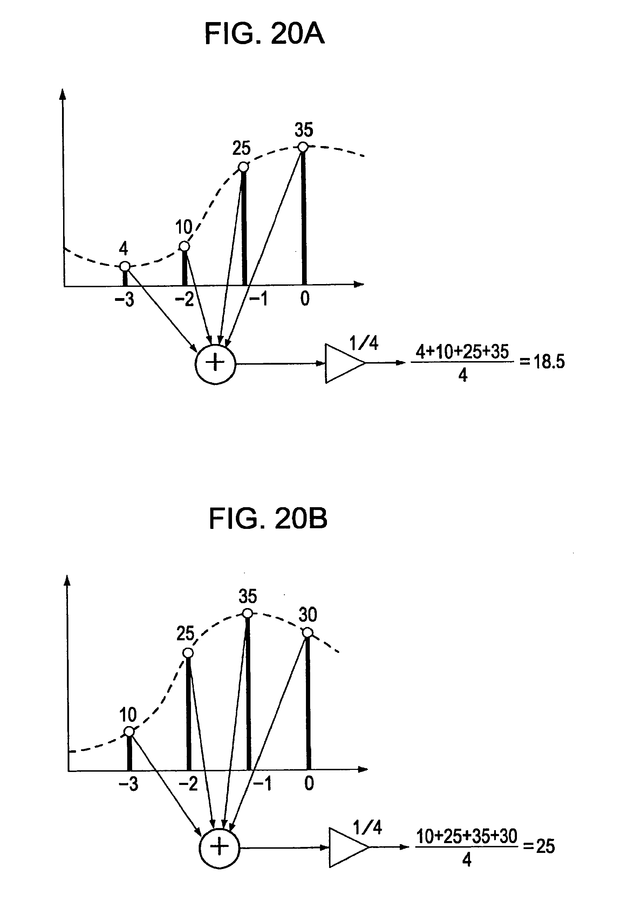

The smoothing filter 1642 is one of the simplest types of low-pass filters, and calculates and outputs an average value of the a process target pixel and the surrounding pixels thereof each time the process target pixel moves by one pixel. For example, as illustrated in Fig. 20A, n sample values including a current sample value (four sample values in Fig. 20A) are averaged at a given time point. As illustrated in Fig. 20B, n sample values including a current sample value (four sample values in Fig. 20B) are averaged at the next time point. The sample value refers to a pixel value. Each time the process target pixel moves by one pixel, n sample values including the values of the process target pixel and the surrounding pixels are averaged.

The smoothing filter characteristic converter 1641 receives the filter parameter PD. The smoothing filter characteristic converter 1641 extracts from the input filter parameters PD a filter parameter positionally corresponding to the partition area in the decoded image data DD, and determines, based on the extracted filter parameter, filter characteristics of the process to be performed by the smoothing filter 1642. For example, smoothing filters are respectively prepared for a plurality of filter parameters PD so that a filter to be used for a target pixel is determined. This process is specifically described below.

The smoothing filter characteristics are interpreted as how many pixels of the pixels surrounding the target pixel are averaged, and the shutter speed difference SSDD and the motion vector VD are used as examples of the filter parameters. In this case, one table is prepared which determines the number of pixels to be used for the smoothing filter with respect to a combination of a shutter speed difference SSDD and a motion vector VD. Each time the shutter speed difference SSDD and the motion vector VD are input, the number of pixels to be used for the smoothing filter is output. The determined number of pixels to be used for the smoothing filter is output to the smoothing filter 1642.

The smoothing filter 1642 (low-pass filter) performs a filtering process on a predetermined block containing the target pixel within the process target frame in accordance with the filter characteristics determined by the smoothing filter characteristic converter 1641, thereby converting the pixel value of the target pixel. The pixel value of the target pixel converted by the smoothing filter 1642 is output to the subtractor 1643. More specifically, the subtractor 1643 receives the pixel value of the target pixel converted by the smoothing filter 1642 although in a polarity inverted form of the pixel value. The subtractor 1643 also receives the target pixel of the process target fame of the input decoded image data DD. The subtractor 1643 calculates a difference value between the pixel value of the pixel in the input image data DD and the pixel value of the target pixel converted by the smoothing filter 1642, and then outputs the difference value to the adder 1644. The adder 1644 receives the difference value between the values before and after the operation of the smoothing filter. The adder 1644 also receives the target pixel of the process target frame in the decoded image data DD. The adder 1644 adds to the uncorrected pixel value of the target pixel the difference value between the values before and after the operation of the smoothing filter, and outputs the addition results as a portion of an output image.

The process of the motion blur reduction processor 164 illustrated in Fig. 19 has been described. The process of the motion blur reduction processor 164 is easy to understand if it is considered in terms of frequency domain. The difference value between the values before and after the operation of the smoothing filter, as the output signal of the subtractor 1643, is now considered in terms of frequency domain. On a given frequency, a difference between a gain of an input image signal and a gain of the image signal that has been filtered by the smoothing filter becomes a gain of the output signal of the adder 1644. The gain of the output image signal of the adder 1644 is the sum of the gain of the input image signal and the gain difference between before and after the operation of the smoothing filter. More specifically, on each frequency, the gain of the output image signal is the gain of the input image signal raised by the gain difference between before and after the operation of the smoothing filter. Since the smoothing filter 1642 is a low-pass filter, the entire process of the motion blur reduction processor 164 illustrated in Fig. 19 is basically equivalent to a high-pass filtering operation.

Japanese Unexamined Patent Application Publication No. 2006-81150 (US Patent Application No. 2007-0070221A1) discloses a technique of performing a motion blur reduction process by directly high-pass filtering a partition area. The high-pass filter is based on the premise that an inverse function of a transfer function of a smoothing filter is used. The frequency characteristics of the smoothing filter contains a frequency that results in zero gain. A complete inverse smoothing filter may not be realized. Also from the standpoint of facilitating the process, the use of a low-pass filter such as the smoothing filter 1642 in the motion blur reduction processor 164 illustrated in Fig. 19 is more appropriate.

The motion blur reduction process is performed in the manner discussed above. The method of reducing the motion blur is not limited to the method described above.

The imaging shutter speed Sb as illustrated in Fig. 18 is considered. The imaging shutter speed Sb is high enough, and the optimum shutter speed is lower than the imaging shutter speed Sb at all the object speeds Va, Vb, and Vc. To generate an image containing a motion blur corresponding to the optimum shutter speed, the motion ad-blur process is performed.

The process selection controller 171 outputs to the sorting unit 163 the process selection control information SCS indicating that the motion ad-blur process has been selected. The sorting unit 163 outputs the signal of each partition area in the decoded image data DD to the motion blur addition processor 165. The motion ad-blur process to be performed by the motion blur addition processor 165 is specifically described. An output image is here generated through spatial filtering.

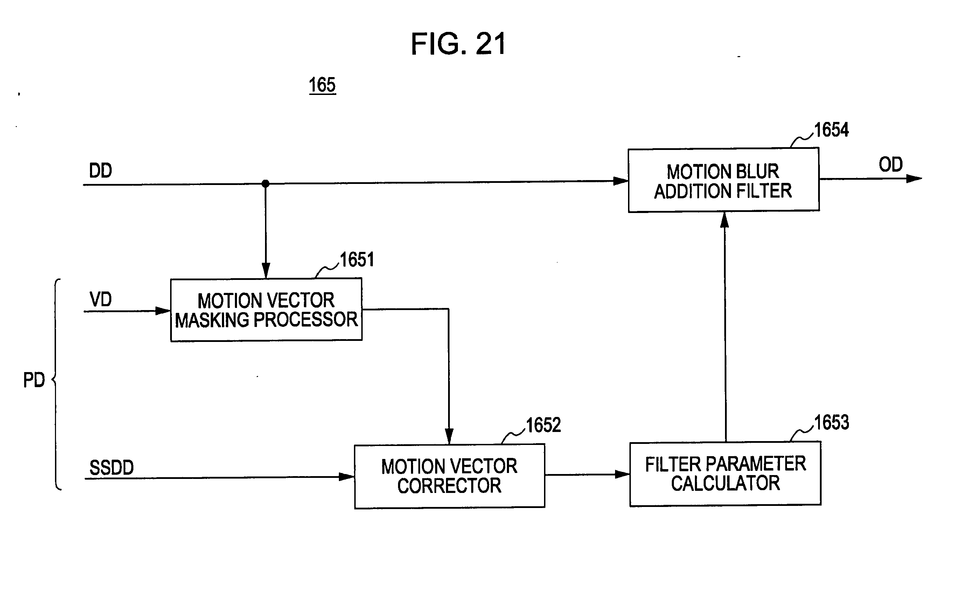

With reference to Fig. 21, the motion blur addition processor 165 includes a motion vector masking processor 1651 generating motion vector mask information identifying an image area to which a motion blur is added, and a motion vector corrector 1652 correcting a motion vector. The motion blur addition processor 165 further includes a filter parameter calculator 1653 calculating a filter parameter for adding the motion blur responsive to a pixel in the process target frame, and a motion blur addition filter 1654 performing a motion blur filtering process on the pixel value of each pixel in the process target frame.

All the processes can be performed on a per pixel basis. However, to reduce the workload in each process, the motion blur addition processor 165 performs the process of the motion vector masking processor 1651 and the motion vector corrector 1652 on a per partition area basis with the partition area being a pixel block. The filtering process of the filter parameter calculator 1653 and the motion blur addition filter 1654 to add the motion blur to the decoded image data DD is performed on a pixel basis rather on a pixel block basis.

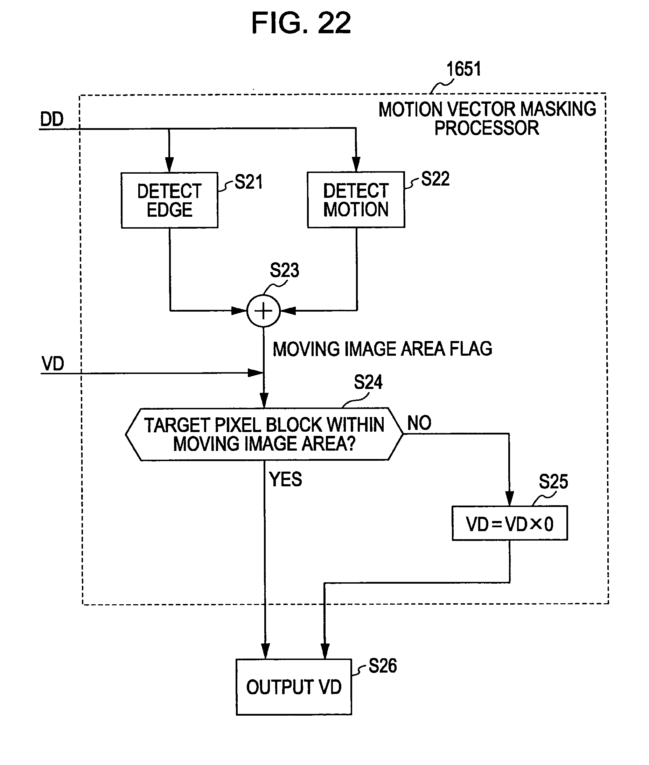

In order to identify in the process target frame an image area to which the motion blur is to be added, the motion vector masking processor 1651 performs a mask process illustrated in Fig. 22 on the motion vector VD of the supplied partition area. The motion vector masking processor 1651 then supplies to the motion vector corrector 1652 the mask processed motion vector of the partition area. The image area which is susceptible to jerkiness degradation and for which motion blur addition is necessary is concentrated in the vicinity of an edge of a moving image on the screen. In the process of Fig. 22, the motion vector masking processor 1651 outputs, as an effective value, the motion vector of only a pixel block, having a high spatial contrast and susceptible to jerkiness, in the vicinity of the edge. In step S21, the motion vector masking processor 1651 detects an edge of an image in the decoded image data DD supplied from the sorting unit 163. The edge is detected on a per pixel block basis in order to identify an area having a high spatial contrast within the process target frame. In parallel with step S21, the motion vector masking processor 1651 detects a moving image area by calculating a difference between frames on a pixel block basis in order to identify the moving image area in the process target frame.

In step S23, the motion vector masking processor 1651 determines on a per pixel block basis whether an area subject to jerkiness has been detected in step S21 and/or step S22. The motion vector masking processor 1651 sets a mask processing flag "1" to the pixel block that has been determined as being subject to jerkiness. The motion vector masking processor 1651 sets a masking process flag "0" to the pixel block that has not been determined as being subject to jerkiness.

In step S24, the motion vector masking processor 1651 determines whether the motion vector VD supplied from the process selection controller 171 is the motion vector VD of the pixel block having the above-described flag "1." The motion vector masking processor 1651 outputs the motion vector of the pixel block having the flag "1" to the motion vector corrector 1652 without no change added to the value of the motion vector (processing proceeds from step S25 to step S26). In step S25, the motion vector masking processor 1651 performs the mask process on the motion vector of the pixel block having the above-described flag "0," thereby setting the value of the motion vector to "0" or invalidating the value of the motion vector. The motion vector masking processor 1651 then outputs the mask processed motion vector to the motion vector corrector 1652 (processing thus proceeds from step S24 to step S25 to step S26).

The process of the motion vector corrector 1652 corrects the motion vector VD using the shutter speed difference SSDD of the input partition area. The motion vector is corrected by the motion vector corrector 1652 if the shutter speed difference SSDD is negative. Let F (frames/second) represents a frame rate of the decoded image data DD as a moving image, and the shutter speed difference SSDD is not smaller than -1/F (seconds). The shutter speed difference SSDD is a difference value between the imaging shutter speed SSD that is not smaller than zero and the optimum shutter speed SSD0 that is not greater than 1/F (seconds).

In the process of adding motion blur, the smaller the shutter speed difference SSDD (the larger the absolute value of the shutter speed difference SSDD), the greater the motion blur quantity to be added becomes. The closer the shutter speed difference SSDD is to zero, the smaller the motion blur quantity to be added becomes. In other words, the smaller the value of the shutter speed difference SSDD, the larger the value of the motion vector VD serving as an indicator of a motion blur quantity to be added. The closer the shutter speed difference SSDD is to zero, the smaller the value of the motion vector VD. The motion vector corrector 1652 thus multiplies the vector value by a function fs (SSDD). In the target pixel block, the function fs (SSDD) converges to 1 as the shutter speed difference SSDD becomes closer to "-1/F" and converges to "0" as the shutter speed difference SSDD becomes closer to "0".

A value A closer to -1/F, and a value B closer to 0 are set wherein the magnitude relationship -1/F < A << B <0 holds. The output value of the function fs is set to 1 for a value equal to or smaller than the value A and the output value of the function fs is set to be 0 for a value equal to or larger than the value B. This method is referred to as a clipping method.

Instead of the function fs (SSDD), the motion vector corrector 1652 may perform a multiplication process with fs (VD) having the motion vector VD as a variable or fs(SSDD, VD) as two variables as the shutter speed difference SSDD and the motion vector VD. The process of adding the motion blur quantity is performed in this way using to the motion vector VD the value of the filter parameter PD such as the shutter speed difference SSDD or the motion vector VD itself. When the data with the motion blur added thereto at the later stage is displayed as a moving image, a more naturally looking image quality in vision characteristics results.

The filter parameter calculator 1653 calculates the filter parameter described below on a per pixel basis in order to add the motion blur to each pixel forming the process target frame. The filter parameter calculator 1653 identifies a pixel positioned on a motion vector of each target pixel (hereinafter referred to as a parameter calculation target pixel). The target pixel is a pixel having effective motion vector information. The filter parameter calculator 1653 calculates a filter parameter responsive to a relative position of the parameter calculation target pixel identified with respect to the target pixel in the manner described below.

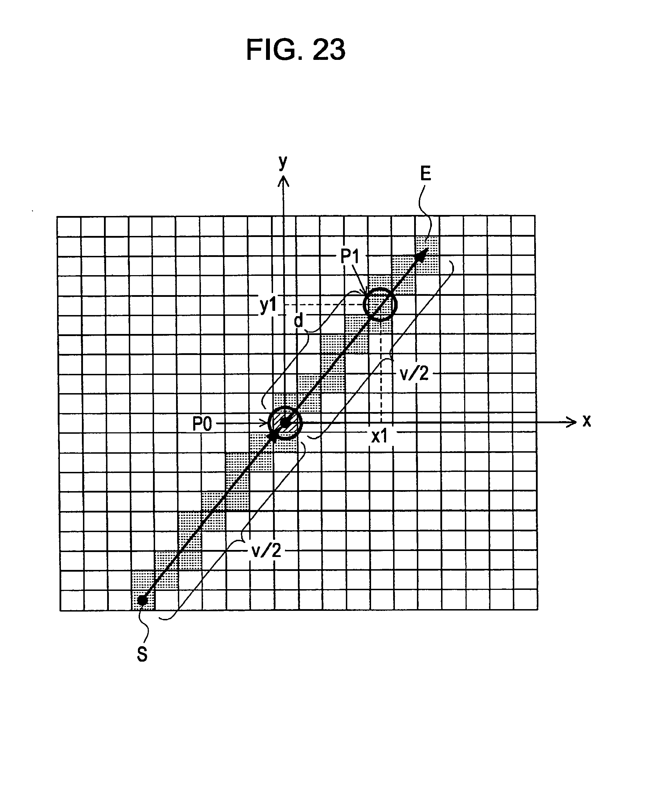

Referring to Fig. 23, the filter parameter calculator 1653 identifies as the parameter calculation target pixels all the pixels present on a motion vector having a target pixel P0 at the midpoint between a start point S and an end point E. As illustrated in Fig. 23, the absolute value v is the absolute value of the motion vector of the target pixel. The filter parameter calculator 1653 then calculates a strength σ of motion blur addition in accordance with the following equation (9) based on the absolute value v of the motion vector, and a distance d between a pixel position of the target pixel P0 and a pixel position of a parameter calculation target pixel P1 identified in the process described above:

$$\sigma = -0.5 \times (d - 0.5)^2 + 0.5 \times \left(\frac{v}{2}\right)^2$$

$$\dots \quad (9)$$

where equation (9) is derived so that the square of the strength σ becomes a variance in the Gaussian function of the subsequent-stage motion blur addition filter 1654.

The filter parameter calculator 1653 calculates an angular direction θ of the motion blur addition in accordance with the following equation (10):

$$\theta = \tan^{-1}\left(\frac{y_1}{x_1}\right)$$

$$\dots \quad (10)$$

where (x1,y1) represents coordinates of the parameter calculation target pixel P1 in the x-y orthogonal coordinates plane system with the target pixel P0 at the origin of the system.

The filter parameter calculator 1653 identifies the parameter calculation target pixel from the motion vector of the target pixel, sets parameter information ($\sigma,\theta$) for each identified parameter calculation target pixel, and then supplies the parameter information ($\sigma,\theta$) to the motion blur addition filter 1654 on a per process target frame basis.

In the process of the filter parameter calculator 1653, a plurality of parameter calculation target pixels can be identified with respect to a given pixel. To facilitate the process in such a case, one of a plurality of pieces of parameter information having the largest $\sigma$ is set as the parameter information of that pixel. The filter parameter calculator 1653 may perform a smoothing process such as a Gaussian function filtering process or a median filtering process on the parameter information ($\sigma,\theta$) of each parameter calculation target pixel so that the image quality of the moving image output from the subsequent motion blur addition filter 1654 is increased.

In response to the parameter information supplied from the filter parameter calculator 1653, the motion blur addition filter 1654 performs a spatial filtering process within the process target frame described below on the pixel value of each pixel within the process target frame of the decoded image data DD. The motion blur addition filter 1654 outputs an image with a motion blur added thereto by a first filtering process and/or a second filtering process.

The first filtering process is described first. In the first filtering process, the motion blur addition filter 1654 receives, in the form of an input I(x+i,y+j), a pixel value of a motion blur addition target pixel prior to the addition of the motion blur and a pixel value of a pixel surrounding the target pixel. The motion blur addition filter 1654 then performs a Gaussian function filtering process on the input I(x+i,y+j) in accordance with a Gaussian function expressed as equation (11), thereby outputting a filter processed pixel value J(x,y):

$$J(x,y) = \left( \frac{\sum I(x+i, y+j) \times e^{-\frac{r^2}{2\sigma^2}}}{\sum e^{-\frac{r^2}{2\sigma^2}}} \right)$$

$$\cdots \quad (11)$$

where the surrounding pixel having the input I(x+i,y+j) is set in accordance with an angle direction in which the motion vector is added, and r represents a distance between the motion blur addition target pixel and the surrounding pixel.

The motion blur addition filter 1654 performs the above-described filtering process on each pixel having the parameter information ($\sigma,\theta$) set therefor from among all the pixels forming the process target frame, thereby updating the pixel value of the pixel. The motion blur addition filter 1654 thus supplies a moving image with jerkiness reduced therefrom to the moving image display output unit 190.

Some of the pixels surrounding the target pixel may be positioned within a stationary area, i.e., a background area. The surrounding pixels positioned within the background area are not taken into consideration in the motion blur addition to the target pixel. The second filtering process focuses on this point. In the second filtering process, the motion blur addition filter 1654 calculates the pixel value J(x,y) of the target pixel in accordance with equation (11) with the pixel value I(x,y) of the target pixel replaced with a pixel value I(x+i0,y+j0) of a surrounding pixel if the surrounding pixel has a motion vector with zero value or an invalid motion vector. The motion blur addition filter 1654 outputs an image with jerkiness reduced in a more natural look than with the first filtering process.

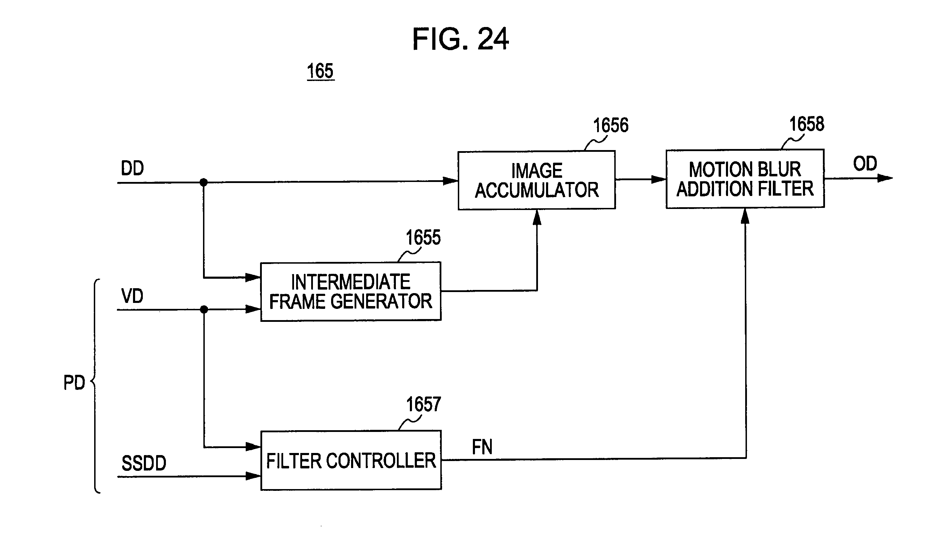

The motion blur addition processor 165 performs the spatial filtering process in the above discussion. Alternatively, the motion blur addition processor 165 may generate an output image by performing a time filtering process. In such a case, a method of adding a motion blur with an appropriate number of intermediate frames generated is useful. The structure of such a method is illustrated in Fig. 24. The motion blur addition processor 165 illustrated in Fig. 24 includes an intermediate frame generator 1655, an image accumulator 1656, a filter controller 1657, and a motion blur addition filter 1658.

The input decoded image data DD is supplied to the intermediate frame generator 1655 and the image accumulator 1656. The intermediate frame generator 1655 generates a predetermined number of new frames interpolating between existing prior and subsequent frames in time direction in accordance with a predetermined intermediate frame generation technique. The intermediate frame generator 1655 then supplies the new frames to the image accumulator 1656. A variety of available methods may be applied as the intermediate frame generation technique. For example, in one method, existing prior and subsequent frames may be blended with weight incorporated. In another method, the motion vector is weighted using information regarding the motion vector at each area input to the intermediate frame generator 1655 and image blending is performed. More accurate intermediate frames can thus be generated.

The filter controller 1657 receives the imaging shutter speed SSD and the motion vector VD, and calculates a filter parameter FN of each partition area for use by the motion blur addition filter 1658 in accordance with the received imaging shutter speed SSD and motion vector VD. The process performed by the motion blur addition filter 1658 is described before the discussion of the filter parameter FN.

The process of the motion blur addition filter 1658 is a frame averaging operation, and the number of frames used in the frame averaging operation is adaptively determined on a per partition area basis. In other words, the frame averaging operation is performed on the number of frames different from partition area to partition area using one frame in the input decoded image data DD and a plurality of frames generated by the intermediate frame generator 1655. In simple terms, the larger the number of frames to be used in the averaging operation, the larger the motion blur quantity to be added becomes, and the smaller the number of frames to be used in the averaging operation, the smaller the motion blur quantity to be added becomes.

Returning to the discussion of the filter controller 1657, the number of frames to be used in the averaging operation is determined in response to each partition area. The filter controller 1657 then outputs the number of frames to the motion blur addition filter 1658. The number of frames to be used in the averaging operation is the filter parameter FN. The minimum number of frames to be used in the averaging operation (the filter parameter FN) is one at minimum, and when the number of frames is one, one frame in the decoded image data DD is output as is without being processed. Let K represent the number of frames generated by the intermediate frame generator 1655 between the existing prior and subsequent frames, and the maximum number of frames is K+1 with the input frame added to the K frames. The filter parameter FN is determined from within a range of from 1 to K+1. As described above, the larger the number of frames, the larger the motion blur quantity to be added becomes.

The determination method of the filter parameter FN is not limited to any one method. In accordance with one embodiment of the present invention, the filter parameter FN is determined using the shutter speed difference SSDD input to the filter controller 1657 as described below. The shutter speed difference SSDD, if negative, is used by the motion blur addition processor 165. Let F (frames/second) represent a frame rate of the decoded image data DD as a moving image, and the shutter speed difference SSDD is not be smaller than -1/F (seconds). The shutter speed difference SSDD is a difference value between the imaging shutter speed SSD that is not smaller than zero and the optimum shutter speed SSD0 that is not greater than 1/F (seconds).

In the process of adding motion blur to be performed at the subsequent stage, the smaller the shutter speed difference SSDD (the larger the absolute value of the shutter speed difference SSDD), the greater the motion blur quantity becomes. The closer the shutter speed difference SSDD is to zero, the smaller the motion blur quantity to be added becomes. In other words, the smaller the value of the shutter speed difference SSDD, the larger the value of the motion vector VD serving as an indicator of a motion blur quantity to be added. The closer the shutter speed difference SSDD is to zero, the smaller the value of the motion vector VD.

The filter controller 1657 thus performs a process in accordance with a function gs (SSDD). The function gs (SSDD) increases and converges to K+1 as the shutter speed difference SSDD becomes closer to "-1/F" and converges to "1" as the shutter speed difference SSDD becomes closer to "0". The filter parameter FN obtained as a result is output to the motion blur addition filter 1658. A value A closer to - 1/F, and a value B closer to 0 are set and the magnitude relationship -1/F < A << B <0 holds. The output value of the function gs is set to be K+1 for a value equal to or smaller than the value A and the output value of the function gs is set to be 1 for a value equal to or larger than the value B. This method is referred to as a clipping method.

Instead of the function gs (SSDD), the filter controller 1657 may perform a multiplication process with gs(VD) having the motion vector VD as a variable or gs(SSDD, VD) as two variables as the shutter speed difference SSDD and the motion vector VD in order to calculate the filter parameter FN.

When the number of frames (FN) for the filter averaging process in each partition area is input, the motion blur addition filter 1658 receives from the image accumulator 1656 the image data of the number of frames for the addition of the motion blur to each partition area, and performs the above-described filter averaging process. When the filter averaging process ends, the image data is reconstructed as a frame image, and then output as the output image signal OD.

As described above, the motion blur addition processor 165 performs the motion blur addition process using one of the spatial filtering process and the time filtering process.

The motion blur addition process is not limited to the process described above.

The imaging shutter speed Sc is between Sa and Sb as illustrated in Fig. 18. Depending on the object speed, the optimum shutter speed may be higher or lower than the imaging shutter speed Sc. In a partition area having Va as the value of the object speed, for example, any method of reducing the motion blur is performed in order to generate an image containing a motion blur at a level corresponding to the optimum shutter speed.

As previously discussed with the imaging shutter speed being at Sa, the process selection controller 171 outputs to the sorting unit 163 process selection control information SCS indicating that the motion blur reduction process has been selected. The sorting unit 163 outputs to the motion blur reduction processor 164 the signal of a partition area in the decoded image data DD. The motion blur reduction processor 164 then performs the filtering process in the same manner as described with reference to the imaging shutter speed Sa.

In the partition area having Vb or Vc as the value of the object speed, any motion addition process is performed to generate an image containing a motion blur at a level corresponding to the optimum shutter speed. As previously discussed with reference to the imaging shutter speed Sb as illustrated in Fig. 18, the process selection controller 171 outputs to the sorting unit 163 process selection control information SCS indicating that the motion blur addition process has been selected. The sorting unit 163 outputs to the motion blur addition processor 165 the signal of a partition area in the decoded image data DD. The motion blur addition processor 165 performs the filtering process in the same manner as described with reference to the imaging shutter speed Sb.

The structure and operation of the image reproducing apparatus 100 corresponding to the image processing apparatus 2 having the second structure discussed with reference to Fig. 3 have been discussed. The image reproducing apparatus 100 performs the correction process in response to jerkiness and blur, thereby controlling the jerkiness degradation and the blur degradation. The image quality of the output image output from the moving image display output unit 190 is thus improved. Even if the information of the shutter speed at the image capturing of the decoded image data DD is unknown, the imaging shutter speed is estimated. The appropriate motion blur correction process is performed based on the evaluated value of the estimated shutter speed.

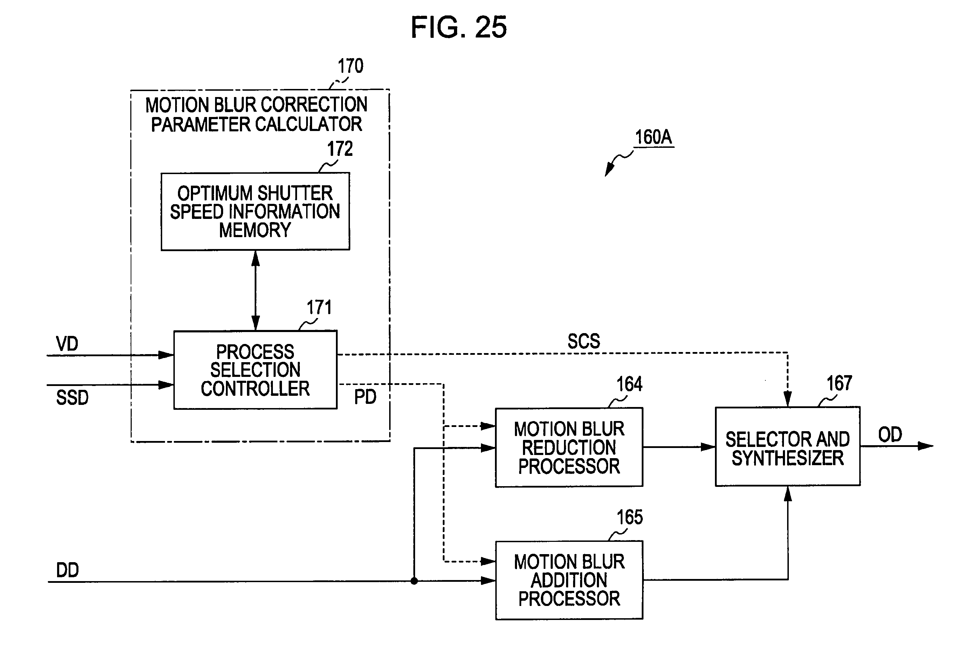

The image reproducing apparatus 100 having the third structure is generally identical to the image reproducing apparatus 100 illustrated in Fig. 5. The image reproducing apparatus 100 having the third structure is different in that a motion blur correction processor 160A is substituted for the motion blur correction processor 160. Fig. 25 illustrates the motion blur correction parameter calculator 170 and a motion blur correction processor 160A in a diagram form similar to that of Fig. 15.

The motion blur correction processor 160A includes the motion blur reduction processor 164, the motion blur addition processor 165, and the selector and synthesizer 167. The process selection controller 171 and the optimum shutter speed information memory 172 in the motion blur correction parameter calculator 170 are identical to the counterparts discussed with reference to Fig. 15 and subsequent drawings. However, it is noted that process selection control information SCS output from the process selection controller 171 is supplied to the selector and synthesizer 167. The correction processes of the motion blur reduction processor 164 and the motion blur addition processor 165 remain unchanged.

With reference to Fig. 25, the sorting unit 163 illustrated in Fig. 15 is not employed. The input decoded image data DD is directly supplied to both the motion blur reduction processor 164 and the motion blur addition processor 165. The motion blur reduction processor 164 performs the motion blur reduction process on all the partition areas of the input decoded image data DD in accordance with the filter parameter PD of each partition area supplied from the process selection controller 171. The resulting image data is output to the selector and synthesizer 167. The motion blur addition processor 165 performs the motion blur addition process on all the partition areas of the input decoded image data DD in accordance with the filter parameter PD of each partition area supplied from the process selection controller 171. The resulting image data is output to the selector and synthesizer 167.

The selector and synthesizer 167 receives the image data having undergone the motion blur addition process at all the partition areas of the decoded image data DD (including a partition area having zero correction quantity) and the image data having undergone the motion blur reduction process at all the partition areas of the decoded image data DD (including a partition area having zero correction quantity). The selector and synthesizer 167 selects the image data of each partition area in response to the scene change detection signal SCD supplied from the process selection controller 171. At each partition area forming one frame, the selector and synthesizer 167 selects between the image data from the motion blur reduction processor 164 and the image data from the motion blur addition processor 165. The selector and synthesizer 167 then synthesizes the selected image data of the partition areas, and then outputs the synthesized image data as the output image signal OD of one frame.

The motion blur correction processor 160A also has the same advantages as the motion blur correction processor 160 illustrated in Fig. 15.

In the above discussion, the specific example of each of the image processing apparatuses 1, 2, and 3 is the image reproducing apparatus 100. The present invention is applicable to a variety of apparatuses. For example, the present invention may be applicable not only to the image reproducing apparatus but also to an imaging apparatus, a communication apparatus, an image recording apparatus, a game playing machine, a video editing apparatus or the like. The information processing apparatus such as a general-purpose personal computer may implement each of the image processing apparatuses 1, 2, and 3. A computer program to be executed by a central processing unit (CPU) that operates as the motion blur correction parameter calculator 12, the motion blur correction processor 13, and the shutter speed estimation processor 14 illustrated in Figs. 1, 3 and 4 may be provided as an image processing application software program. The computer can thus perform an appropriate image processing. The computer program to be executed by the central processing unit (CPU) includes calculating the motion blur correction parameter for the motion blur correction process on the basis of the motion information indicating the motion of the image between unit images forming the image data, and the shutter speed information at the image capturing of the image data, and correcting the motion blur contained in the image data by performing at least the motion blur reduction process using the motion blur correction parameter. The computer program further includes estimating the shutter speed by analyzing the image data. When the motion blur correction parameter is calculated, the estimated shutter speed is used. The operation of the shutter speed estimation processor 14 is thus performed by the CPU.

The computer program allows the same image processing to be performed by a personal computer, a cellular phone, a personal digital assistant (PDA), and a variety of image processing apparatuses using image data.

The computer program causing the CPU to operate as the motion blur correction parameter calculator 12, and the motion blur correction processor 13 (and the shutter speed estimation processor 14) may be pre-stored on a hard disk drive as a recording medium contained in an apparatus such as a computer, or a read-only memory (ROM), a flash memory or the like of a microcomputer having a CPU. The computer program may also be stored temporarily or permanently on removable recording media including a flexible disk, a compact disc read only memory (CD-ROM), a magneto-optical (MO) disc, a digital versatile disc (DVD), Blu-ray disc (registered trademark of Sony), a magnetic disc, a semiconductor memory, and a memory card. Such a removable recording medium may be supplied as package software. The computer program may be installed onto the personal computer from such a removable recording medium. The computer program may also downloaded from a download site via a network such as a local area network (LAN), or the Internet.

The present application contains subject matter related to that disclosed in Japanese Priority Patent Application JP 2008-161581 filed in the Japanese Patent Office on June 20, 2008, the entire content of which is hereby incorporated by reference.

It should be understood by those skilled in the art that various modifications, combinations, subcombinations and alterations may occur depending on design requirements and other factors insofar as they are within the scope of the appended claims or the equivalents thereof.

**Claims**

1. An image processing apparatus, comprising:

   correction parameter calculation means for calculating a motion blur correction parameter for motion blur correction on the basis of motion information indicating a motion of an image between unit images, the unit images forming image data, and shutter speed information obtained at the image capturing of the image data; and
   motion blur correction processing means for correcting a motion blur quantity contained in the image data by performing at least a process of reducing a motion blur in accordance with the motion blur correction parameter.

2. The image processing apparatus according to claim 1, wherein the motion blur correction processing means performs a process of adding a motion blur on the image data and the process of reducing a motion blur in accordance with the motion blur correction parameter.

3. The image processing apparatus according to claim 1 or 2, wherein the motion blur correction processing means adaptively selects in response to each partition area of the image data one of the process of adding the motion blur and the process of reducing the motion blur on the image data, in accordance with the motion blur correction parameter.

4. The image processing apparatus according to claim 1 or 2, wherein the motion blur correction processing means performs on the image separately the process of adding the motion blur and the process of reducing the motion blur, and selects between data resulting from the process of adding the motion blur and data resulting from the process of reducing the motion blur in accordance with the motion blur correction parameter as data to be adaptively output for each partition area of the image data.

5. The image processing apparatus according to any one of the preceding claims, further comprising motion vector generating means for generating from the image data a motion vector as the motion information.

6. The image processing apparatus according to any one of the preceding claims, further comprising shutter speed estimation processing means for estimating shutter speed information by analyzing the image data, wherein the correction parameter calculation means uses the shutter speed information estimated by the shutter speed estimation processing means in order to calculate the motion blur correction parameter.

7. The image processing apparatus according to claim 6, wherein the shutter speed estimation processing means comprises a motion blur characteristic analyzer for extracting a shutter speed calculation parameter by analyzing motion blur characteristics contained in a target area of the image data; and an imaging shutter speed calculator for calculating the shutter speed at the image capturing of the image data.

8. The image processing apparatus according to claim 7, wherein the shutter speed estimation processing means further comprises a process target area selector for extracting and identifying from the unit image forming the image data the target area of the analysis process of the motion blur characteristic analyzer.

9. The image processing apparatus according to claim 8, further comprising motion vector generating means for generating from the image data a motion vector as the motion information, wherein the process target area selector in the shutter speed estimation processing means identifies the target area using edge information of the image data, and the motion vector generated by the motion vector generating means.

10. The image processing apparatus according to any one of claims 7 to 9, wherein the shutter speed estimation processing means further comprises an imaging shutter speed accuracy enhancement processor, wherein the motion blur characteristic analyzer extracts the shutter speed calculation parameters of a plurality of target areas, wherein the imaging shutter speed calculator calculates a plurality of shutter speeds using the shutter speed calculation parameters of the plurality of target areas and the motion information of the respective target areas, and wherein the imaging shutter speed accuracy enhancement processor estimates an imaging shutter speed using calculation results of the plurality of shutter speeds.

11. The image processing apparatus according to any one of claims 6 to 10, wherein the shutter speed estimation processing means estimates the shutter speed once within a period from the detection of a scene change to the detection of a next scene change in the input image data, and holds the estimated shutter speed within the period; or the shutter speed estimation processing means comprises an imaging shutter speed accuracy enhancement processor, the imaging shutter speed accuracy enhancement processor estimating the shutter speed by a plurality of times within a period from the detection of a scene change to the detection of a next scene change in the input image data, and estimating an imaging shutter speed on the basis of the calculation results of the plurality shutter speeds estimated.

12. The image processing apparatus according to any one of the preceding claims, wherein the correction parameter calculation means acquires an optimum shutter speed corresponding to a speed of an object from each partition area of the image data by referencing mapping information mapping the object speed to an imaging shutter speed at which image quality degradation of an output image is reduced, and calculates the motion blur correction parameter as selection control information for selecting between a process of adding a motion blur and a process of reducing a motion blur on the image data by comparing information regarding an input imaging shutter speed with the optimum shutter speed.

13. The image processing apparatus according to any one of the preceding claims, wherein the correction parameter calculation means calculates the motion blur correction parameter indicating one of the degree of addition of the motion blur and the degree of reduction of the motion blur, respectively used by the motion blur correction processing means in the process of adding the motion blur and the process of reducing the motion blur on the image data, the motion blur correction parameter comprising for example, one of an imaging shutter speed; a difference between the imaging shutter speed and an optimum shutter speed; and movement speed information of a partition area.

14. An image processing method, comprising the steps of:

calculating a motion blur correction parameter for motion blur correction on the basis of motion information indicating a motion of an image between unit images, the unit images forming image data, and shutter speed information obtained at the image capturing of the image data; and correcting a motion blur quantity contained in the image data by performing at least a process of reducing a motion blur in accordance with the motion blur correction parameter.

**15.** A program executable on a computer and capable on execution of causing the computer to perform an image processing method according to claim 14.

**FIG. 1**  _1_

MOTION BLUR CORRECTION PROCESSOR 13

31 SORTING UNIT

32 MOTION BLUR REDUCTION PROCESSOR

33 MOTION BLUR ADDITION PROCESSOR

34 SYNTHESIZER

MOTION BLUR CORRECTION PARAMETER

IMAGE DATA

11 IMAGE ACQUISITION UNIT

MOTION INFORMATION

12 MOTION BLUR CORRECTION PARAMETER CALCULATOR

SHUTTER SPEED INFORMATION

EP 2 136 554 A2

# FIG. 2

ONE FRAME

# FIG. 3  $\underline{2}$

MOTION BLUR CORRECTION PROCESSOR  13

MOTION BLUR REDUCTION PROCESSOR  32

SYNTHESIZER  34

SORTING UNIT  31

MOTION BLUR ADDITION PROCESSOR  33

IMAGE DATA

SHUTTER SPEED ESTIMATION PROCESSOR  14

SHUTTER SPEED INFORMATION

MOTION BLUR CORRECTION PARAMETER

IMAGE ACQUISITION UNIT  11

MOTION INFORMATION

MOTION BLUR CORRECTION PARAMETER CALCULATOR  12

EP 2 136 554 A2

# FIG. 4  <u>3</u>

EP 2 136 554 A2

## FIG. 5

EP 2 136 554 A2

FIG. 6

140

EP 2 136 554 A2

# FIG. 7

```
                    ┌──────────────┐
                    │    START     │
                    └──────┬───────┘
                           │
                           ▼                        S1
        ╱──────────────────────────────────────╲
       ╱   MOTION VECTOR OF TARGET PIXEL         ╲   YES
       ╲         BLOCK EFFECTIVE?                 ╱ ────────┐
        ╲──────────────────┬─────────────────────╱         │
                           │ NO                             │
                           ▼                        S2      │
        ╱──────────────────────────────────────╲           │
       ╱   MOTION VECTOR AT SURROUNDING          ╲   NO     │
       ╲ PIXELS OF THE TARGET PIXEL EFFECTIVE?   ╱ ──────┐  │
        ╲──────────────────┬─────────────────────╱       │  │
                           │ YES                          │  │
                           ▼                     S3       │  │
                ┌──────────────────────┐                 │  │
                │ ESTIMATE MOTION VECTOR│                 │  │
                │    OF TARGET PIXEL    │                 │  │
                └──────────┬───────────┘                 │  │
                           │◄────────────────────────────┘◄─┘
                           ▼
                    ┌──────────────┐
                    │     END      │
                    └──────────────┘
```

## FIG. 8

# FIG. 9

ILLUMINANCE

POSITION

IMAGING
DEVICE

(i) HIGH-SPEED
SHUTTER IMAGING

(ii) LOW-SPEED
SHUTTER IMAGING

LUMINANCE

COORDINATES

FOREGROUND
LUMINANCE Bf

BACKGROUND
LUMINANCE Bb

p

p0

MOTION BLUR
LENGTH L

EP 2 136 554 A2

FIG. 10A1    FIG. 10A2

L=9    L=8

FIG. 10B1    FIG. 10B2

L=6    L=4

FIG. 10C1    FIG. 10C2

L=3    L=2

LUMINANCE

COORDINATES

## FIG. 11A

EDGE EXTRACTION PROCESS

## FIG. 11B

MOTION VECTOR

ED (EDGE DATA)

EXECUTED ON A PLURALITY OF AREAS

AR1

AR2

AR3

AR4

AR5

DD

TARGET AREA (ONE HORIZONTAL LINE)

EDGE DATA (ED)

## FIG. 11C

LUMINANCE

COORDINATES

p0

L

LUMINANCE INFORMATION IN TARGET AREA

EP 2 136 554 A2

## FIG. 12

150

PROCESS TARGET AREA SELECTOR — 151

SCENE CHANGE DETECTOR — 1514

VERTICAL DIRECTION EDGE DETECTOR — 1511

TARGET AREA DETERMINER — 1513

HORIZONTAL DIRECTION MOVEMENT SPEED THRESHOLD VALUE PROCESSOR — 1512

MOTION BLUR CHARACTERISTIC ANALYZER — 152

IMAGING SHUTTER SPEED CALCULATOR — 153

IMAGING SHUTTER SPEED ACCURACY ENHANCEMENT PROCESSOR — 154

SCENE CHANGE DETECTION SIGNAL RECEIVER — 1543

IMAGING SHUTTER SPEED ACCUMULATOR — 1541

IMAGING SHUTTER SPEED FILTERING PROCESSOR — 1542

DD  SCD  DDT  L  RESET SIGNAL  SSD  VDT  SSDT  VD

EP 2 136 554 A2

FIG. 13

SIGNAL IN PROCESS TARGET AREA

1521 — FAST FOURIER TRANSFORM (FFT) UNIT

DOMINANT FREQUENCY COMPONENT

1522 — FREQUENCY COMPONENT MATCHING UNIT

1523 — MOTION BLUR SAMPLE FREQUENCY TABLE

MOTION BLUR LENGTH L

## FIG. 14

| MOTION BLUR LENGTH (PIXELS) | TOP THREE VALUES OF FREQUENCY COMPONENTS (Hz) | | |
|---|---|---|---|
| La | ak | bk | ck |
| Lb | al | bl | cl |
| Lc | am | bm | cm |
| Ld | an | bn | cn |
| Le | ao | bo | co |
| Lf | ap | bp | cp |
| ⋮ | ⋮ | | |
| Lmax | az | bz | cz |

EP 2 136 554 A2

## FIG. 15

EP 2 136 554 A2

# FIG. 16

EP 2 136 554 A2

# FIG. 17

IMAGING SHUTTER SPEED SSD

PARTITION AREA
MOVEMENT SPEED AVT

DETERMINE OPTIMUM
SHUTTER SPEED — S10

OPTIMUM SHUTTER SPEED SSD0

SSD < SSD0? — S11

YES

NO

ADD MOTION BLUR — S12

REDUCE MOTION
BLUR — S13

FIG. 18

A2

A1

SS0

OBJECT SPEED

LOW → HIGH

Vc    Vb    Va

IMAGING SHUTTER SPEED

LONG (LOW) ← → SHORT (HIGH)

Sa    Sc    Sb

# FIG. 19

164

DD → OD

MOVEMENT SMOOTHING FILTER — 1642

MOVEMENT SMOOTHING FILTER CHARACTERISTIC CONVERTER — 1641

PD { VD, SSDD }

1644

1643

EP 2 136 554 A2

# FIG. 20A

$$\frac{4+10+25+35}{4} = 18.5$$

# FIG. 20B

$$\frac{10+25+35+30}{4} = 25$$

FIG. 21

165

# FIG. 22

1651

MOTION VECTOR MASKING PROCESSOR

DD

DETECT EDGE — S21

DETECT MOTION — S22

S23

$\bigoplus$

MOVING IMAGE AREA FLAG

VD

TARGET PIXEL BLOCK WITHIN MOVING IMAGE AREA? — S24

NO

YES

VD = VD × 0 — S25

OUTPUT VD — S26

# FIG. 23

FIG. 24

165

FIG. 25

160A

170 MOTION BLUR CORRECTION PARAMETER CALCULATOR

172 OPTIMUM SHUTTER SPEED INFORMATION MEMORY

171 PROCESS SELECTION CONTROLLER

VD

SSD

SCS

PD

DD

164 MOTION BLUR REDUCTION PROCESSOR

165 MOTION BLUR ADDITION PROCESSOR

167 SELECTOR AND SYNTHESIZER

OD

FIG. 26A

FIG. 26B

(a) TRACKING VISION

(b) FIXED VISION

DISPLAY POSITION (x)

FIG. 27A

81

82

1/60 sec

TIME (t)

FIG. 27B

a81

a82

(a) TRACKING VISION

(b) FIXED VISION

b81    b82    b82    b82

**FIG. 28A**

DISPLAY POSITION (x)

91 92

1/60 sec

TIME (t)

**FIG. 28B**

(a) TRACKING VISION

a91 a92

(b) FIXED VISION

b91 b92

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007274299 A
- WO 07114220 A
- JP 2004282318 A

- JP 2006081150 A
- US 20070070221 A1
- JP 2008161581 A

### Non-patent literature cited in the description

- **Takahiro SAITO ; Hiroyuki HARADA ; Takashi KOMATSU.** Extension of Coupled Nonlinear Diffusion to Motion De-blurring - Introduction of Anisotropic Peaking. *The Institute of Image Information and Television Engineers,* 2004, vol. 58 (12), 1839-1844
- **Takahiro SAITO ; Hiroyuki HARADA ; Taishi SANO ; Takashi KOMATSU.** Motion De-blurring Using a Blur Model. *The Institute of Image Information and Television Engineers,* 2005, vol. 59 (11), 1714-1721

- **Bunyo OKUMURA ; Masayuki KANBARA ; Naokazu YOKOYA.** Photometric Registration Based on Defocus and Motion Blur Estimation for Augmented Reality. *The Institute of Electronics, Information and Communication Engineers, D,* vol. J90-D (8), 2126-2136